(19) Europäisches Patentamt
European Patent Office
Office européen des brevets

(11) **EP 4 657 362 A1**

(12) **EUROPEAN PATENT APPLICATION**
published in accordance with Art. 153(4) EPC

(43) Date of publication:
**03.12.2025 Bulletin 2025/49**

(21) Application number: **24847514.7**

(22) Date of filing: **24.01.2024**

(51) International Patent Classification (IPC):
**G06T 1/20** (2006.01)

(52) Cooperative Patent Classification (CPC):
**G06T 1/20; G06T 15/00**

(86) International application number:
**PCT/CN2024/073885**

(87) International publication number:
**WO 2025/025545 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 CN 202310974211**

(71) Applicant: **Huawei Technologies Co., Ltd.
Shenzhen, Guangdong 518129 (CN)**

(72) Inventors:
• HU, Jingqiao
  Shenzhen, Guangdong 518129 (CN)
• DENG, Yixin
  Shenzhen, Guangdong 518129 (CN)
• ZHANG, Liangkai
  Shenzhen, Guangdong 518129 (CN)
• RAO, Changping
  Shenzhen, Guangdong 518129 (CN)

(74) Representative: **MERH-IP Matias Erny Reichl Hoffmann
Patentanwälte PartG mbB
Paul-Heyse-Straße 29
80336 München (DE)**

(54) **DISPLAY PROCESSING METHOD AND ELECTRONIC DEVICE**

(57) This application provides a display processing method and an electronic device. A mapping relationship between a simulation mesh and a rendering mesh is preconfigured, so that the corresponding rendering mesh can be directly obtained based on the mapping relationship after the simulation mesh is determined. In this way, physical computing load is reduced as much as possible while an exquisite picture quality effect is ensured, thereby implementing an exquisite animation effect. The method includes: An electronic device determines, in response to a first operation of a user, a theme used by the electronic device, where the theme includes an elastic body displayed on an always on display screen. Then, the electronic device obtains a simulation mesh corresponding to the elastic body; and maps the simulation mesh to a rendering mesh based on a mapping relationship. The electronic device displays, based on the rendering mesh, the always on display screen including the elastic body.

FIG. 16

**Description**

This application claims priority to Chinese Patent Application No. 202310974211.4, filed with the China National Intellectual Property Administration on August 2, 2023 and entitled "DISPLAY PROCESSING METHOD AND ELECTRONIC DEVICE", which is incorporated herein by reference in its entirety.

**TECHNICAL FIELD**

Embodiments of this application relate to the field of terminal technologies, and in particular, to a display processing method and an electronic device.

**BACKGROUND**

With development of terminal technologies, an electronic device increases fun of interface display by combining a real physical motion display animation effect, to attract more user traffic. For example, a live wallpaper displayed by the electronic device includes an animation effect of an object conforming to a real physical motion. The key to performance of a physical animation effect lies in real-time simulation.

Currently, real-time simulation of mobile terminals (such as mobile phones and tablets) mainly focuses on rigid body and small-scale scenarios. However, for elastic body and large-scale scenarios, it is difficult to ensure a display effect of physical animation effects due to a computing amount and other problems.

**SUMMARY**

To resolve the foregoing technical problem, this application provides a display processing method and an electronic device. In technical solutions provided in this application, a mapping relationship between a simulation mesh and a rendering mesh is preconfigured, so that the corresponding rendering mesh can be directly obtained based on the mapping relationship after the simulation mesh is determined. In this way, physical computing load is reduced as much as possible while an exquisite picture quality effect is ensured, thereby implementing an exquisite animation effect.

To achieve the foregoing technical objective, this application provides the following technical solutions.

According to a first aspect, a display processing method is provided, and is applied to an electronic device. The method includes: determining, in response to a first operation of a user, a theme used by the electronic device, where the theme includes an elastic body displayed on an always on display screen; obtaining a simulation mesh corresponding to the elastic body; mapping the simulation mesh to a rendering mesh based on a mapping relationship; and displaying, based on the rendering mesh, the always on display screen including the elastic body.

In an existing tessellation shader, subdivision can be implemented only by modifying an interpolated vertex to allow a generated surface to follow a mesh normal, resulting in generating additional subdivision processing load. According to the display processing method provided in embodiments of this application, the electronic device can directly map the simulation mesh to the rendering mesh at a time based on the offline preset mapping relationship, so that subdivision processing load is reduced while a subdivision effect is ensured.

In addition, the mapping relationship between the simulation mesh and the rendering mesh is established in an offline process. Therefore, an original vertex of the simulation mesh can be modified to obtain the rendering mesh with a more delicate and smooth effect.

According to the first aspect, obtaining the simulation mesh corresponding to the elastic body includes: obtaining first simulation duration for a first platform of the electronic device to simulate the elastic body and second simulation duration for a second platform of the electronic device to simulate the elastic body; and invoking, based on the first simulation duration and the second simulation duration, the first platform and/or the second platform to simulate the elastic body.

According to the first aspect or any implementation of the first aspect, invoking, based on the first simulation duration and the second simulation duration, the first platform and/or the second platform to simulate the elastic body includes: when the first simulation duration is less than the second simulation duration, invoking the first platform to simulate the elastic body; or when the second simulation duration is less than the first simulation duration, invoking the second platform to simulate the elastic body; or when third simulation duration is less than the first simulation duration and the second simulation duration, invoking the first platform and the second platform to simulate the elastic body, where the third simulation duration is simulation duration that is determined based on the first simulation duration and the second simulation duration and that is required when the first platform and the second platform are invoked to perform cooperative simulation on the elastic body.

For example, the first platform is a CPU platform, and the second platform is a GPU platform.

Currently, only a programmer is allowed to specify whether a program is compiled into CPU code or GPU code in a development phase. According to the display processing method provided in embodiments of this application, a platform used for computing can be dynamically switched during running, and a platform with better performance can be automatically selected based on different hardware platforms and computing scales in different service scenarios, to implement physical simulation with a better effect.

According to the first aspect or any implementation of the first aspect, before obtaining the first simulation duration for the first platform to simulate the elastic body and the second simulation duration for the second platform to simulate the elastic body, the method further includes: obtaining N types of operators corresponding to the theme, where N is a positive integer; and obtaining first computing duration for the first platform to execute each operator in the N types of operators, second computing duration for the second platform to execute each operator in the N types of operators, and data transmission duration for each operator in the N types of operators from the first platform to the second platform.

For example, the N types of operators that correspond to the theme and that are obtained by the electronic device are gradient computing, integral computing, multiple computing, and Fourier transform computing. In this case, the electronic device may determine the first computing duration for the first platform to separately execute gradient computing, integral computing, multiple computing, and Fourier transform computing, and the second computing duration for the second platform to separately execute gradient computing, integral computing, multiple computing, and Fourier transform computing, and determine the data transmission duration from the first platform to the second platform.

In this way, before selecting a platform, the electronic device first determines actual computing duration of different platforms for each operator, so that accurate platform scheduling can be implemented subsequently based on the actual computing duration, and therefore adaptive application to hardware platforms of different devices is implemented.

According to the first aspect or any implementation of the first aspect, obtaining the first simulation duration for the first platform to simulate the elastic body and the second simulation duration for the second platform to simulate the elastic body includes: obtaining a quantity of operators of the N types of operators corresponding to the elastic body; obtaining, based on the quantity of operators and the first computing duration, first duration for the first platform to separately execute the N types of operators; obtaining, based on the quantity of operators, the second computing duration, and the data transmission duration, second duration for the second platform to separately execute the N types of operators, where the second duration includes accumulated transmission duration for transmitting each operator in the N types of operators from the first platform to the second platform; determining the first simulation duration based on the first duration; and determining the second simulation duration based on the second duration.

For example, duration for the first platform to execute one time of gradient computing is first computing duration a, duration for the second platform to execute one time of gradient computing is second computing duration b, duration for the first platform to transmit data of one time of gradient computing to the second platform is c, and the elastic body corresponds to d times of gradient computing. In this case, the first duration for the first platform to execute gradient computing is a*d, and the second duration for the second platform to execute gradient computing is (b + c)*d, where a, b, and c are positive numbers, and d is a positive integer.

For example, the N types of operators that include the theme and that are obtained by the electronic device are gradient computing, integral computing, multiple computing, and Fourier transform computing. In addition, it is determined that the first platform and the second platform respectively compute the first operator duration and the second operator duration of the various operators, and the quantity of the various operators. For example, the electronic device determines that the first duration for the first platform to execute gradient computing is 3 milliseconds, and the second duration for the second platform to execute gradient computing is 1 millisecond; the first duration for the first platform to execute integral computing is 3.5 milliseconds, and the second duration for the second platform to execute integral computing is 1 millisecond; and the first duration for the first platform to execute multiple computing is 10 milliseconds, and the second duration for the second platform to execute integral computing is 1 millisecond. In this case, the electronic device may determine that the first simulation duration for invoking the first platform to simulate the elastic body is 16.5 milliseconds (3 milliseconds + 3.5 milliseconds + 10 milliseconds), and the first simulation duration for invoking the second platform to simulate the elastic body is 3 milliseconds (1 millisecond + 1 millisecond + 1 millisecond). In this case, based on the second simulation duration being less than the first simulation duration, the electronic device may determine to invoke the second platform to simulate the elastic body, to obtain the simulation mesh.

According to the first aspect or any implementation of the first aspect, the method further includes: determining that the first duration corresponding to a first-type operator in the N types of operators is less than the second duration, and invoking the first platform to execute the first-type operator; and determining that the second duration corresponding to a second-type operator in the N types of operators is less than the first duration, and invoking the second platform to execute the second-type operator.

For example, the electronic device determines that the first duration for the first platform to execute gradient computing is 3 milliseconds, and the second duration for the second platform to execute gradient computing is 1 millisecond; the first duration for the first platform to execute integral computing is 3.5 milliseconds, and the second duration for the second platform to execute integral computing is 1 millisecond; and the first duration for the first platform to execute multiple computing is 1 millisecond, and the second duration for the second platform to execute integral computing is 10 milliseconds. In this case, the electronic device may determine that the first-type operator is multiple computing, the second-type operator is gradient computing and integral computing, and a sum of duration for the first platform to execute the first-type operator and duration for the second platform to execute the second-type operator is 3 milliseconds (1 millisecond + 1 millisecond + 1 millisecond). In this case, the electronic device may determine to invoke the first platform to execute multiple computing, and invoke the second platform to execute gradient computing and integral computing. In this way, the first platform and the second platform complete cooperative simulation on the elastic body with shorter duration, to output the simulation mesh, thereby improving simulation efficiency.

In this way, the electronic device separately pre-evaluates the duration for the first platform and/or the second platform to simulate the elastic body, determines, based on the evaluated duration, an invoking manner that can implement better performance, and invokes a corresponding platform to simulate the elastic body, thereby improving simulation efficiency while ensuring that the simulation mesh can be output.

According to the first aspect or any implementation of the first aspect, the method further includes: detecting a second operation performed by the user on the always on display screen, and invoking the first platform and/or the second platform to simulate the elastic body; displaying a first animation of the elastic body from the always on display screen to a lock screen interface; and displaying the lock screen interface including the elastic body.

According to the first aspect or any implementation of the first aspect, the method further includes: detecting a third operation performed by the user on the lock screen interface, and invoking the first platform and/or the second platform to simulate the elastic body; displaying a second animation of the elastic body from the lock screen interface to a home screen; and displaying the home screen.

According to the first aspect or any implementation of the first aspect, in a process of displaying the first animation, displaying the lock screen interface including the elastic body, and displaying the second animation, a platform invoked by the electronic device is the same as a platform invoked by the electronic device in a process of displaying the always on display screen including the elastic body.

In this way, after allocating, based on the elastic body included in the theme, the platform used to simulate the elastic body, the electronic device can continuously invoke the same platform to simulate the elastic body that is displayed on a plurality of interfaces and that is included in the same theme. Based on consistency of display effects of the theme on interfaces in different phases, display effects and display processing efficiency can be ensured, and unnecessary repeated platform selection can be avoided.

According to the first aspect or any implementation of the first aspect, before determining, in response to the first operation of the user, the theme used by the electronic device, the method further includes: obtaining and storing the mapping relationship, where the mapping relationship includes a mapping matrix used to convert the simulation mesh into the rendering mesh.

For example, in a development phase, a programmer may offline create a mapping relationship between a simulation mesh and a rendering mesh by using an offline topology construction module, and directly preset the mapping relationship in the electronic device.

In this way, the electronic device maps, based on the mapping relationship, a simulation mesh updated after physical simulation to a high-resolution rendering mesh at a time for each frame, to reduce subdivision processing load.

According to a second aspect, an electronic device is provided. The electronic device includes a processor, a memory, and a display. The memory and the display are coupled to the processor. The memory is configured to store computer program code. The computer program code includes computer instructions. When the processor reads the computer instructions from the memory, the electronic device is enabled to perform the following operations: determine, in response to a first operation of a user, a theme used by the electronic device, where the theme includes an elastic body displayed on an always on display screen; obtain a simulation mesh corresponding to the elastic body; map the simulation mesh to a rendering mesh based on a mapping relationship; and display, based on the rendering mesh, the always on display screen including the elastic body.

According to the second aspect, obtaining the simulation mesh corresponding to the elastic body includes: obtaining first simulation duration for a first platform of the electronic device to simulate the elastic body and second simulation duration for a second platform of the electronic device to simulate the elastic body; and invoking, based on the first simulation duration and the second simulation duration, the first platform and/or the second platform to simulate the elastic body.

According to the second aspect or any implementation of the second aspect, invoking, based on the first simulation duration and the second simulation duration, the first platform and/or the second platform to simulate the elastic body includes: when the first simulation duration is less than the second simulation duration, invoking the first platform to simulate the elastic body; or when the second simulation duration is less than the first simulation duration, invoking the second platform to simulate the elastic body; or when third simulation duration is less than the first simulation duration and the second simulation duration, invoking the first platform and the second platform to simulate the elastic body, where the third simulation duration is simulation duration that is determined based on the first simulation duration and the second simulation duration and that is required when the first platform and the second platform are invoked to perform cooperative simulation on the elastic body.

According to the second aspect or any implementation of the second aspect, when the processor reads the computer instructions from the memory, the electronic device is further enabled to perform the following operations: obtain N types of operators that include the theme, where N is a positive integer; and obtain first computing duration for the first platform to execute each operator in the N types of operators, second computing duration for the second platform to execute each operator in the N types of operators, and data transmission duration for each operator in the N types of operators from the first platform to the second platform.

According to the second aspect or any implementation of the second aspect, obtaining the first simulation duration for the first platform to simulate the elastic body and the second simulation duration for the second platform to simulate the elastic body includes: obtaining a quantity of operators of the N types of operators corresponding to the elastic body; obtaining, based on the quantity of operators and the first computing duration, first duration for the first platform to separately execute the N types of operators; obtaining, based on the quantity of operators, the second computing duration, and the data transmission duration, second duration for the second platform to separately execute the N types of operators, where the second duration includes accumulated transmission duration for transmitting each operator in the N types of operators from the first platform to the second platform; determining the first simulation duration based on the first duration; and determining the second simulation duration based on the second duration.

According to the second aspect or any implementation of the second aspect, when the processor reads the computer instructions from the memory, the electronic device is further enabled to perform the following operations: determine that the first duration corresponding to a first-type operator in the N types of operators is less than the second duration, and invoke the first platform to execute the first-type operator; and determine that the second duration corresponding to a second-type operator in the N types of operators is less than the first duration, and invoke the second platform to execute the second-type operator.

According to the second aspect or any implementation of the second aspect, when the processor reads the computer instructions from the memory, the electronic device is further enabled to perform the following operations: detect a second operation performed by the user on the always on display screen, and invoke the first platform and/or the second platform to simulate the elastic body; display a first animation of the elastic body from the always on display screen to a lock screen interface; and display the lock screen interface including the elastic body.

According to the second aspect or any implementation of the second aspect, when the processor reads the computer instructions from the memory, the electronic device is further enabled to perform the following operations: detect a third operation performed by the user on the lock screen interface, and invoke the first platform and/or the second platform to simulate the elastic body; display a second animation of the elastic body from the lock screen interface to a home screen; and display the home screen.

According to the second aspect or any implementation of the second aspect, in a process of displaying the first animation, displaying the lock screen interface including the elastic body, and displaying the second animation, a platform invoked by the electronic device is the same as a platform invoked by the electronic device in a process of displaying the always on display screen including the elastic body.

According to the second aspect or any implementation of the second aspect, when the processor reads the computer instructions from the memory, the electronic device is further enabled to perform the following operation: obtain and store the mapping relationship, where the mapping relationship includes a mapping matrix used to convert the simulation mesh into the rendering mesh.

According to a third aspect, an electronic device is provided. The electronic device has a function of implementing the display processing method according to the first aspect and any possible implementation of the first aspect. The function may be implemented by hardware, or may be implemented by hardware executing corresponding software. The hardware or the software includes one or more modules corresponding to the function.

According to a fourth aspect, a computer-readable storage medium is provided. The computer-readable storage medium stores a computer program (which may also be referred to as instructions or code). When the computer program is executed by an electronic device, the electronic device is enabled to perform the method according to the first aspect or any implementation of the first aspect.

According to a fifth aspect, a computer program product is provided. When the computer program product runs on an electronic device, the electronic device is enabled to perform the method according to the first aspect or any implementation of the first aspect.

For technical effects of the foregoing aspects, refer to each other. Details are not described herein again.

## BRIEF DESCRIPTION OF DRAWINGS

FIG. 1 is a diagram of a physical engine based on a CUDA computing platform according to an embodiment of this application;

FIG. 2 is a schematic flowchart of a physical engine based on a CUDA computing platform according to an embodiment of this application;

FIG. 3 is a schematic flowchart of a tessellation shader solution according to an embodiment of this application;

FIG. 4 is a diagram of a subdivision principle according to an embodiment of this application;

FIG. 5 is a diagram of a hardware structure of an electronic device according to an embodiment of this application;

FIG. 6(a) to FIG. 6(c) are a diagram 1 of an elastic body scenario according to an embodiment of this application;

FIG. 7(a) and FIG. 7(b) are a diagram 2 of an elastic body scenario according to an embodiment of this application;

FIG. 8(a) and FIG. 8(b) are a diagram 3 of an elastic body scenario according to an embodiment of this application;

FIG. 9 is a schematic flowchart 1 of a display processing method according to an embodiment of this application;

FIG. 10 is a functional block diagram of a display processing method according to an embodiment of this application;

FIG. 11 is a diagram of interaction between modules in a display processing method according to an embodiment of this application;

FIG. 12 is a diagram of a load evaluation-automatic scheduling principle according to an embodiment of this application;

FIG. 13 is a diagram of an offline topology acceleration structure according to an embodiment of this application;

FIG. 14 is a diagram of a scenario in which a simulation mesh is mapped to a rendering mesh according to an embodiment of this application;

FIG. 15 is a diagram of a rendering mesh effect according to an embodiment of this application;

FIG. 16 is a schematic flowchart 2 of a display processing method according to an embodiment of this application; and

FIG. 17 is a diagram of a structure of an electronic device according to an embodiment of this application.

## DESCRIPTION OF EMBODIMENTS

The following describes technical solutions in embodiments of this application with reference to the accompanying drawings in embodiments of this application. In descriptions of embodiments of this application, terms used in the following embodiments are merely intended to describe specific embodiments, but are not intended to limit this application. The terms "one", "a", "the", "the foregoing", "this", and "the one" of singular forms used in this specification and the appended claims of this application are intended to include expressions such as "one or more", unless otherwise specified in the context clearly. It should be further understood that, in the following embodiments of this application, "at least one" and "one or more" mean one or more than two (including two).

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner. The term "connection" includes direct connection and indirect connection, unless otherwise specified. "First" and "second" are merely intended for description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, an electronic device increases fun of interface display by combining a real physical motion display animation effect, to attract more user traffic. For example, a live wallpaper displayed by the electronic device includes an animation effect of an object conforming to a real physical motion. The key to performance of a physical animation effect lies in real-time physical simulation. Physical simulation, also referred to as simulation, simulation, or physical simulation, predicts behavior or a result of a real world or a physical system in a computer.

In some examples, a real physical attribute is assigned to an object in a computer to compute a simulation result, and a physical engine has a capability of simulating simulation results of various objects, such as a rigid body, an elastic body, and a fluid. For example, the physical engine computes motion, rotation, and collision reflection of the object in a manner of assigning the real physical attribute to the object. The rigid body (rigid body) is a concept of physics, and a solid body with a finite size that can be displaced or rotated but cannot be deformed under an action of an external force. The elastic body (elastic body/soft body), also referred to as a flexible body, is a concept of physics, and a solid body with a finite size that can be displaced, rotated, or deformed under an action of an external force and can restore its shape after the external force is removed. The fluid is a concept of physics, a general term of liquid and gas, and an object that can be continuously deformed under an action of any slight shear force.

Performance of physical simulation depends on development of the physical engine. Mainstream physical engines in the industry have experienced development from simple rigid body scenarios to complex fluid scenarios and from small-scale scenarios to large-scale scenarios. Table 1 below lists several mainstream physical engines in the industry, corresponding back-end platforms, and mainly applied device types. Havok has a large ecosystem, and PhysX has full functions. However, these physical engines with powerful functions are mainly used on PCs and hosts. Few mobile terminals (such as mobile phones and tablets) support a real-time simulation function, and currently rigid body or simple cloth simulation scenarios are focused on. Computing is almost only based on a central processing unit (central processing unit, CPU), and computing based on a graphics processing unit (graphics processing unit, GPU) is not basically supported. There is a huge gap in performance optimization for 3D exquisite physical simulation.

Table 1

| Physical engine | Back-end platform | | Device type |
|---|---|---|---|
| | CPU | GPU | |
| PhysX | √ | CUDA | Personal computer (personal computer, PC) |
| Havok | √ | OpenCL | Host (play station (play station, PS) and Xbox) |
| Bullet | √ | OpenCL | Host (virtual reality (virtual reality, VR) and robot) |
| Box2D | √ | N/A | Mobile terminal |

In some examples, a compute unified device architecture (compute unified device architecture, CUDA) and an open computing language (open computing language, OpenCL) are computing platforms that are currently widely used in the industry, and support implementation of various algorithm GPU and CPU versions, so that the GPU can resolve a complex computing problem.

It should be understood that the physical engine and the computing platform in the example in Table 1 are merely examples for description, and more other physical engines and computing platforms may also be applicable to the display processing method provided in embodiments of this application. Details are not described below again.

In some embodiments, computing power of CPUs and GPUs of different devices is greatly different from each other. A single-core CPU has a strong computing capability, and running startup is fast. A GPU has a strong parallel computing capability, and operation startup incurs additional consumption in a preparation phase.

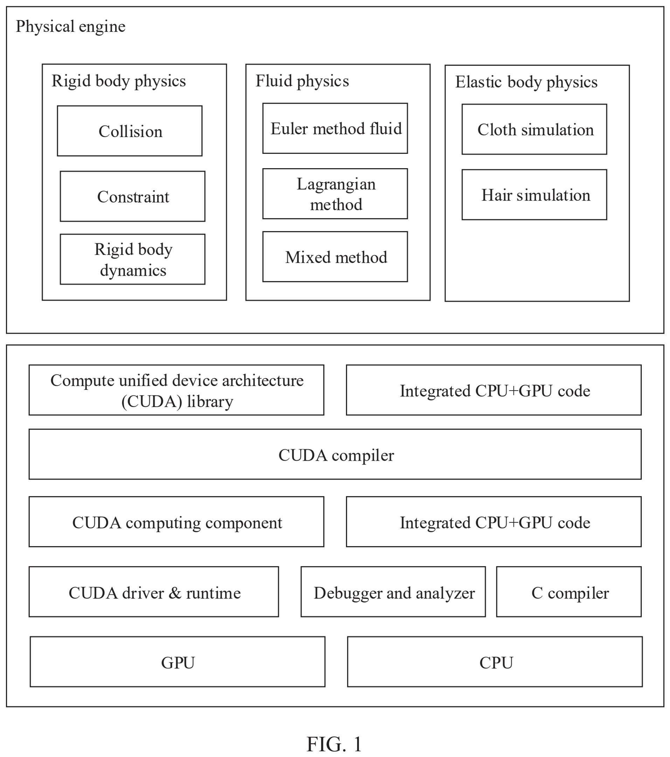

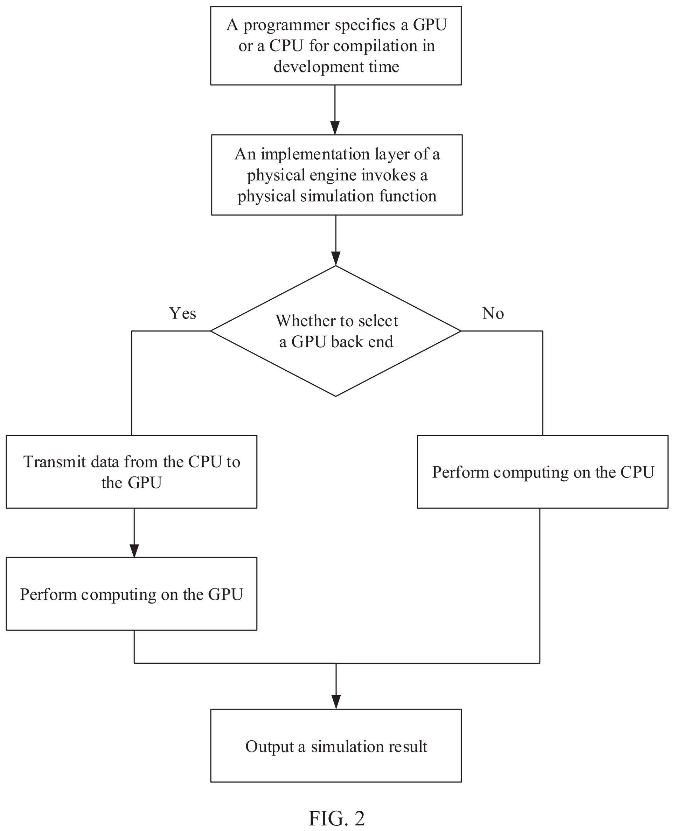

In some examples, as shown in Table 1 above, the current mainstream physical engines support both the CPU and the GPU. Taking the CUDA computing platform as an example, as shown in FIG. 1, a device internally provides implementation of a CPU version and a GPU version by using various algorithms, and a programmer needs to specify, in a development phase, whether a program is compiled into CPU code or GPU code. An upper layer is an implementation layer of the physical engine, including basic components of rigid body physics, fluid physics, and elastic body physics, and respective corresponding dynamic simulation algorithms. For example, as shown in FIG. 2, the programmer estimates a computing requirement based on a target scenario and a computing scale, and specifies the GPU or the CPU for code compilation in development time. Then, the implementation layer of the physical engine invokes a corresponding bottom-layer operation algorithm to implement a physical simulation function. For example, if the programmer selects a GPU back-end platform, an operation is performed on the GPU in a data transmission and preparation phase; or if the programmer selects a CPU back-end platform, an operation is directly performed on the CPU in a data transmission and preparation phase.

In some examples, in different physical computing scales, GPU and CPU computing may generate different performance results. Optionally, the performance result is measured based on a frame rate. The frame rate indicates a measure of a quantity of frames displayed in a current animation, in a unit of "frame per second" (frame per second, FPS). A larger frame rate of the current animation indicates higher performance.

For example, as shown in Table 2 below, when 10* 10* 10 box-shaped objects fall in a scenario, the CPU back-end platform is selected for faster computing. When a scale is increased to 11*11*11 box-shaped objects that fall, the GPU back-end platform is used for faster computing. As the physical computing scale increases, a gap between a computing speed of the GPU back-end platform and a computing speed of the CPU back-end platform becomes increasingly large.

However, a manner of selecting a back-end platform can be specified only by the programmer in the development time, but the programmer cannot estimate a specific service scenario of a subsequent device in a user's usage process in the development time. In this case, the computing back-end platform specified by the programmer may not provide better display performance for the device.

Table 2

| Test scenario | Computing back end | Frame rate (FPS) |
|---|---|---|
| 10*10*10 box stacked falling | CPU computing | 84 |
| | GPU computing | 77 |
| 11*11*11 box stacked falling | CPU computing | 62 |
| | GPU computing | 64 |
| 12*12*12 box stacked falling | CPU computing | 46 |
| | GPU computing | 64 |
| 1000 rag dolls | CPU computing | 18 |
| | GPU computing | 33 |

In view of this, an embodiment of this application provides a display processing method. A physical engine computing platform can adapt to different computing power devices and different service scenarios, and adaptively select a CPU back-end platform or a GPU back-end platform. In this way, complex physical computation is implemented in different configurations and scenarios to achieve better computing performance.

In some examples, a high-quality and exquisite effect of a displayed picture has a high requirement on a model resolution, real-time physical simulation requires responding to a motion state in each frame of image of the displayed picture, and simulation performance is strongly related to a mesh computing scale. In addition, physical computing load needs to be reduced while picture quality is ensured. Currently, a common solution in the industry is to separate a model mesh into a simulation mesh and a rendering mesh. In computer simulation computation, a continuously represented object needs to be converted into a discretely represented simulation mesh. When an object is presented on a screen of a computer, a continuously represented object needs to be converted into a discretely represented rendering mesh. The simulation mesh has a low resolution, and the rendering mesh has a high resolution. The simulation mesh is converted into the rendering mesh to improve the resolution. In addition, the simulation mesh is output first and then converted into the rendering mesh to reduce computing load while meeting a high-resolution requirement.

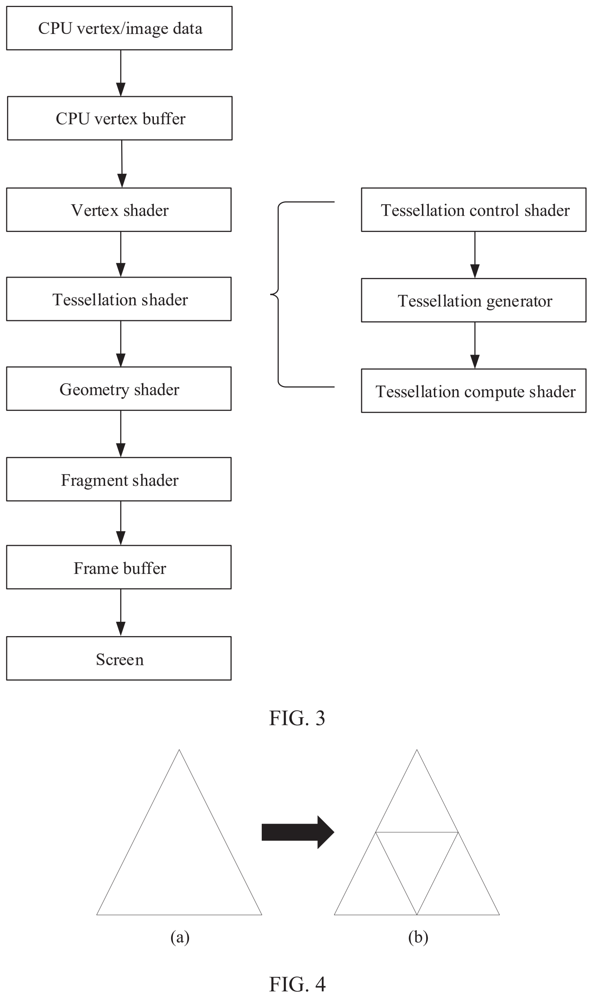

For example, FIG. 3 shows a method for implementing separation of simulation and rendering meshes by using a tessellation shader. The tessellation shader (tessellation shader) is a computer program used for special effect production, and is also a shader running in a GPU. For example, in a service scenario, the tessellation shader divides a simple mesh into finer meshes through computation by using a specific function.

As shown in FIG. 3, after an application transfers vertex and image data to a vertex buffer in a GPU memory, the vertex buffer transfers a vertex array to a vertex shader, and the vertex shader performs operations such as rotation, scaling, and coordinate conversion. Then, the tessellation shader converts a simulation mesh obtained after processing by the vertex shader into a rendering mesh, and transfers the rendering mesh to a geometry shader. The geometry shader assembles primitives and determines a graphics drawing mode based on a defined connection relationship between vertices. In addition, the geometry shader performs rasterization based on the primitive, traverses each screen pixel to determine whether the screen pixel is covered by the primitive, and transfers the screen pixel to a fragment shader to color each pixel. Then, a result of the fragment shader is output to a frame buffer. Finally, content of the frame buffer is displayed on a screen.

In some examples, a creation engine tool Unity is used as an example to analyze a specific working process of the tessellation shader. A built-in tessellation shader of Unity can be implemented in a plurality of manners, all of which are limited to triangle meshes. For example, the tessellation shader performs subdivision on a fixed amount of surface by directly adding a fixed amount of surface subdivision to each mesh cell. Distance-based surface subdivision changes a surface subdivision level based on a distance between a mesh cell and a virtual camera. For example, a closer distance indicates a higher subdivision degree. For example, the distance is determined based on depth information of the mesh cell. Side length-based surface subdivision may compute a subdivision level based on a side length of a screen triangle. A mesh cell with a longer side length indicates a higher subdivision degree. Phong (Phong) surface subdivision can modify a position of a generated subdivision surface, so that the generated subdivision surface can finally match a mesh normal. Phong surface subdivision can smooth a surface mesh. Phong subdivision is a type of tessellation shader, and an operation rule of Phong subdivision is to modify an interpolated vertex, so that a generated surface follows a mesh normal. For example, as shown in (a) in FIG. 4, the tessellation shader determines three vertices and three sides of a triangular mesh, and subdivides, based on side lengths, the triangular mesh into four triangular meshes shown in (b) in FIG. 4.

In the foregoing process, a higher subdivision degree indicates a better presentation effect of a finally displayed picture. However, such a method often cannot modify a vertex of an original mesh, for example, cannot modify the vertexes of the triangular mesh. In addition, a required subdivision degree is high, resulting in introduction of large subdivision processing load.

In addition, the tessellation shader runs on the GPU back-end platform and depends on a compiler type, resulting in different effects on different chips. In this case, after a tessellation shader that can implement a good display effect and that is set on a device 1 is operated on a device 2, an output picture may have a poor display effect, and consistency of display effects on different types of devices cannot be ensured.

Another solution to reducing the physical computing load while ensuring the picture quality is to implement refined mesh division directly at the CPU end through Loop (Loop) subdivision or mesh regularization computation. Loop subdivision is an algorithm for subdivision of meshes in a CPU. A vertex of an original mesh and an interpolated vertex are modified to obtain more refined meshes through division.

However, although such a method obtains a better rendering effect, computing costs are extremely high; and the method is usually performed in a model post-processing manner, which is difficult to be used for a real-time animation.

In view of this, an embodiment of this application provides a display processing method. A mapping relationship between a simulation mesh and a rendering mesh is preconfigured, so that the corresponding rendering mesh can be directly obtained based on the mapping relationship after a computing platform outputs the simulation mesh. In this way, physical computing load is reduced as much as possible while an exquisite picture quality effect is ensured, thereby implementing an exquisite UI animation effect.

For example, the display processing method provided in embodiments of this application is applied to an electronic device 100. The electronic device 100 may be, for example, a terminal device such as a mobile phone, a tablet computer, a notebook computer, a smart screen, a wearable device, a vehicle-mounted terminal, an augmented reality (augmented reality, AR)/VR device, a PS, an Xbox, a PC, an ultra-mobile personal computer (ultra-mobile personal computer, UMPC), a netbook, a personal digital assistant (personal digital assistant, PDA), or an artificial intelligence (artificial intelligence, AI) device. An operating system installed in the electronic device 100 includes but is not limited to iOS®, Android®, HarmonyOS®, Windows®, Linux®, or another operating system. A specific type of the electronic device 100 and the installed operating system are not limited in embodiments of this application.

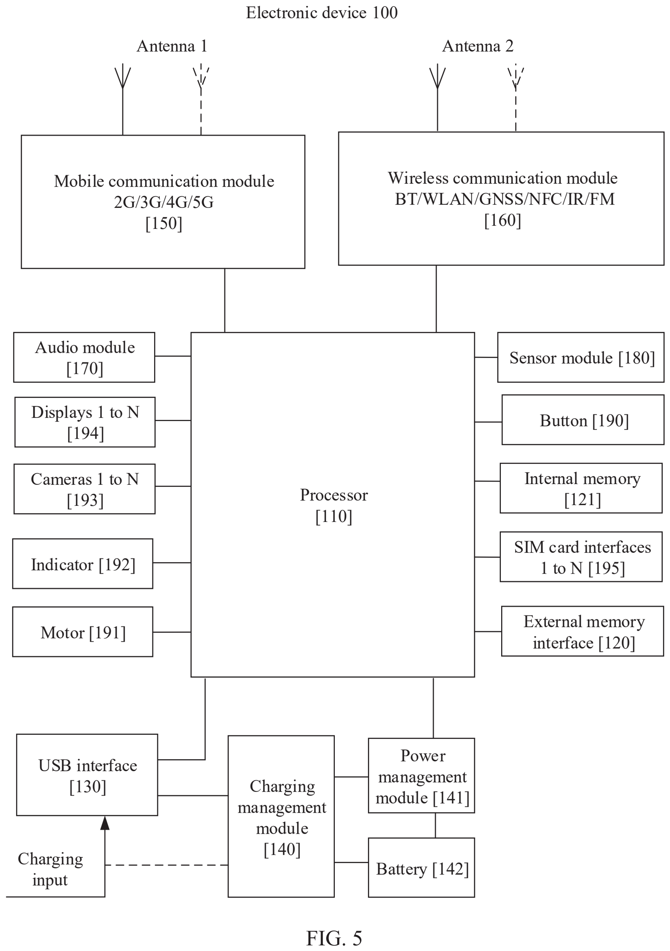

FIG. 5 is a diagram of a structure of the electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the electronic device 100.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing an audio through the headset. The interface may be further configured to connect to another electronic device such as an AR device.

It can be understood that an interface connection relationship between modules illustrated in this embodiment of this application is merely an illustrative description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, or quantum dot light-emitting diodes (quantum dot light-emitting diodes, QLED). In some embodiments, the electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the electronic device 100 and data processing.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The electronic device 100 may perform music playing, recording, or the like through the audio module 170. The audio module 170 may include a speaker, a receiver, a microphone, a headset jack, an application processor, and the like to implement an audio function.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The electronic device 100 may receive a key input, and generate a key signal input related to user setting and function control of the electronic device 100.

The motor 191 may generate a vibration prompt. The motor 191 may be configured to provide an incoming call vibration prompt and a touch vibration feedback. The motor 191 may also correspond to different vibration feedback effects for touch operations performed on different areas of the display 194. Different application scenarios (for example, a time reminder, information receiving, an alarm clock, and a game) may also correspond to different vibration feedback effects.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1.

The following describes in detail the display processing method provided in embodiments of this application by using an example in which computing platforms are CUDA and OpenCL, and a back-end platform supported by a physical engine includes a CPU and a GPU.

For ease of understanding, the following examples show several animation effect display scenarios of an elastic body.

In some scenarios, the electronic device is configured with a theme function. By using the theme function, a user can set display of at least one phase in always on display screen display, lock screen interface display, home screen display, and the like at a time, so that the user can more quickly and conveniently set the electronic device in a personalized manner. Based on different themes, display of the theme in each phase may include elastic body animation effect display, for example, displaying an elastic body animation effect on an always on display screen, displaying an elastic body animation effect on a lock screen interface, and displaying an elastic body animation effect in a process of switching from the always on display screen to the lock screen interface.

For example, in response to a user operation, the electronic device sets a moving-ball theme, and displays, on the always on display screen and the lock screen interface, an elastic body animation effect display scenario in which an elastic ball moves.

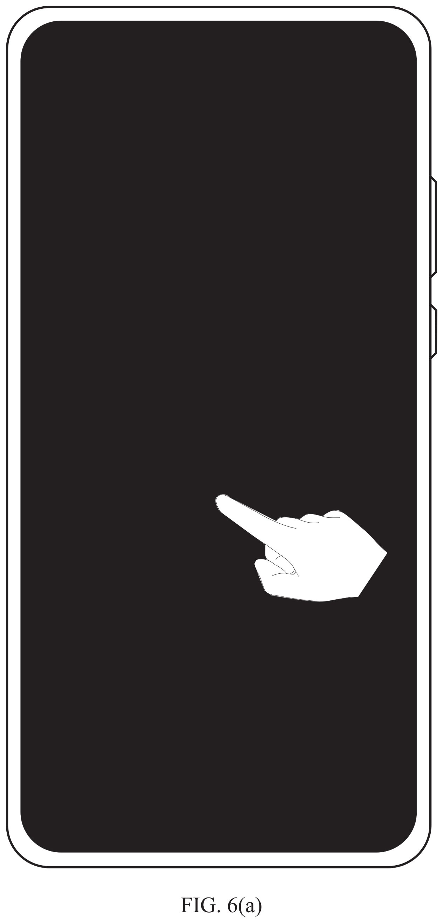

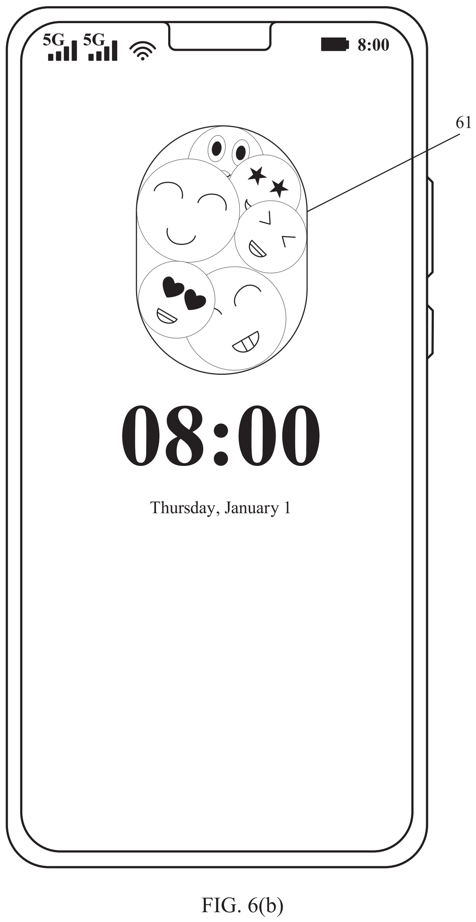

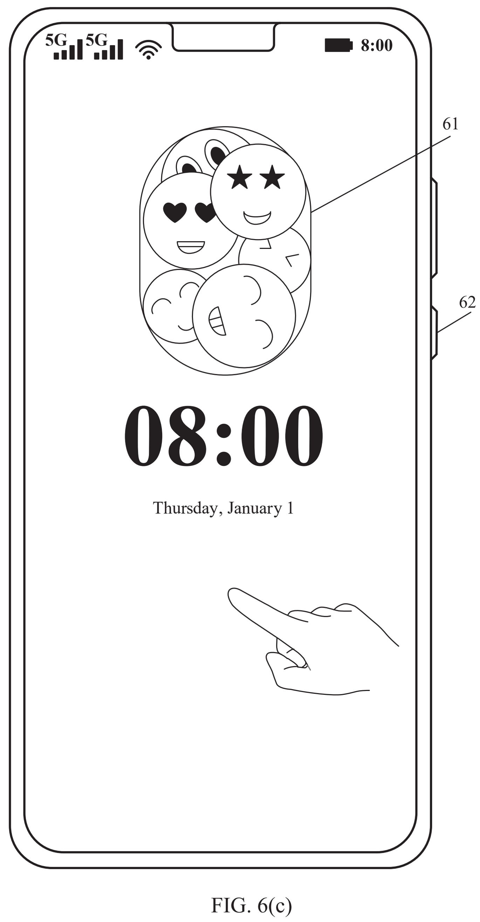

For example, as shown in FIG. 6(a), in a process of being in a black-screen state, after detecting an operation of tapping a display by the user, or detecting, through a sensor (such as a camera), that the user approaches, the electronic device may display an always on display screen shown in FIG. 6(b). A function window 61 is displayed on the always on display screen. In a process in which the electronic device displays the always on display screen, an element (for example, an elastic ball) on the always on display screen moves on the always on display screen based on the moving-ball theme. For example, as shown in FIG. 6(b), the electronic device may display an element animation effect in the function window 61, for example, display motions of a plurality of elastic balls in the function window. As shown in FIG. 6(b) and FIG. 6(c), as time changes, motion states of the plurality of elastic balls displayed in the function window change. For example, sizes, motion trajectories, shapes, and the like all change due to collision between the elastic balls. In this way, based on the elastic body animation effect display scenario, the electronic device increases fun of displaying the always on display screen.

For another example, as shown in FIG. 6(c), in a process of displaying the always on display screen, the electronic device may display the lock screen interface after detecting an operation performed by the user on a lock screen button 62 or detecting a double-tap operation performed by the user on the display. In a process in which the electronic device displays the lock screen interface, an element (for example, an elastic ball) on the lock screen interface moves on the lock screen interface based on the moving-ball theme. Optionally, to maintain consistency of the theme, animation effects in different phase may be continuously displayed. For example, the electronic device may link the elastic body animation effect on the always on display screen with the elastic body animation effect on the lock screen interface. In a process of switching from the always on display screen to the lock screen interface in response to the user operation, the electronic device uses the elastic body animation effect displayed on the always on display screen as a motion start point of the elastic body animation effect displayed on the lock screen interface.

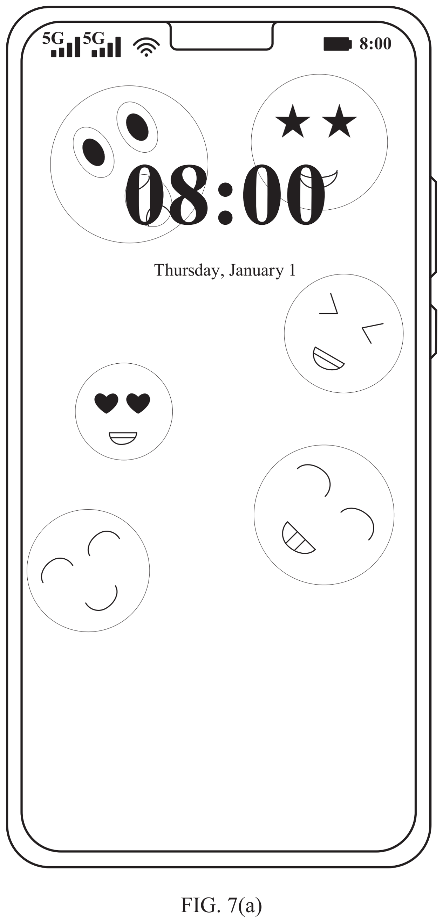

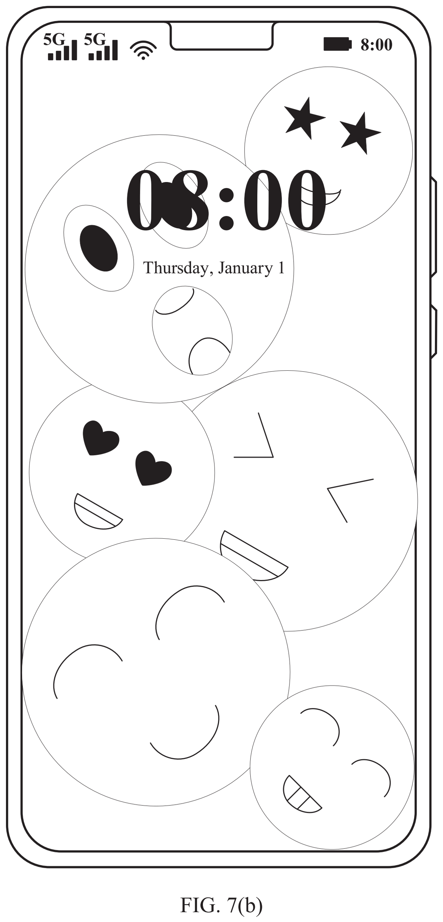

For example, in the process of displaying the always on display screen shown in FIG. 6(c), the electronic device detects an operation of indicating to switch to the lock screen interface by the user, and the electronic device may control an animation effect, displayed in the function window 61, of the elastic ball moving across the entire display. For example, on the lock screen interface shown in FIG. 7(a), the elastic ball has already moved from being displayed in the function window to being displayed outside the function window. Motion of the elastic ball continues until the elastic ball shown in FIG. 7(b) moves to an edge position of the display, for example, until the elastic ball comes into contact with an edge of the lock screen interface. In this way, based on the elastic body animation effect display scenario, the electronic device increases fun of displaying the lock screen interface.

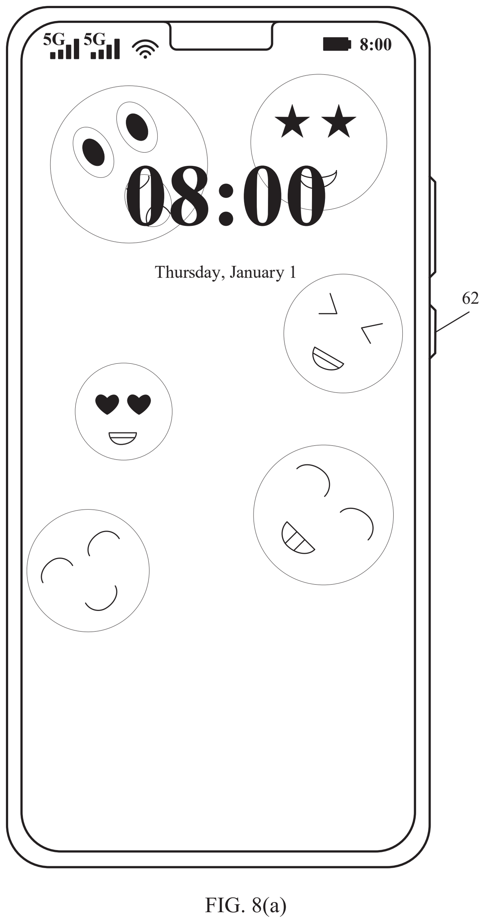

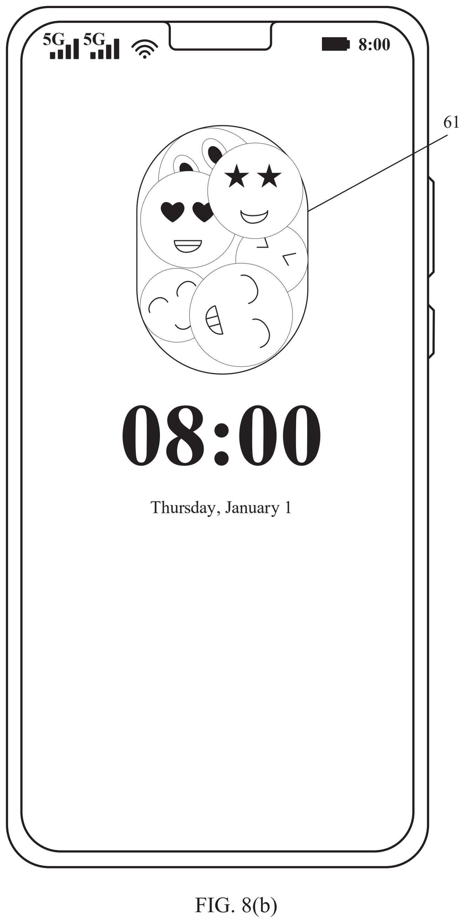

For another example, in a process in which the electronic device displays an animation effect of the elastic ball moving from the function window 61 to the entire display, as shown in FIG. 8(a), after detecting an operation performed by the user on the lock screen button 62, the electronic device may stop displaying the current animation effect. For example, the electronic device reversely controls the elastic ball to move into the function window 61. In a process of switching from the lock screen interface to the displayed always on display screen in response to the user operation, as shown in FIG. 8(b), the electronic device displays the elastic ball that moves back into the function window 61. In this way, based on the elastic body animation effect display scenario, the electronic device increases association of animation effects during interface switching between the always on display screen and the lock screen interface, thereby improving user experience.

In some other scenarios, the electronic device may alternatively separately set an elastic body animation effect display scenario of each interface in response to a user operation. For example, the user selects a live wallpaper for the always on display screen, and display of the live wallpaper includes elastic body animation effect display. For another example, the user selects a live wallpaper for the lock screen interface, and display of the lock screen wallpaper includes elastic body animation effect display. Elastic body animation effects between different interfaces may be associated or may not be associated.

In some examples, real-time simulation of the elastic body relates to complex collision detection and collision response, and therefore has a high computing requirement.

It should be understood that the display processing method provided in embodiments of this application not only may be applied to an animation effect display scenario of an elastic body, but also may be applied to animation effect display scenarios of a rigid body, a fluid, and the like. In embodiments of this application, a display processing process is described only by using the animation effect display scenario of the elastic body that has a high computing requirement as an example.

In addition, the display processing method provided in embodiments of this application may be applied to a small-scale animation effect scenario or a large-scale animation effect scenario. Details are not described below again. The small-scale animation effect scenario and the large-scale animation effect scenario are only relative descriptions of an animation effect scale. For example, if a quantity of objects that execute the animation effect does not exceed a threshold, it may be considered as a small-scale animation effect scenario; and if a quantity of objects that execute the animation effect exceeds the threshold, it may be considered as a large-scale animation effect scenario.

In some embodiments, a physical engine is configured in an application, and is configured to process a motion response of an object in an animation effect display process. The application may be a system-native application or may be a third-party application. For example, the application is a lock screen application, a screen saver application, a systemUI, a third-party theme application, a third-party wallpaper application, or the like. Alternatively, the application is another game application.

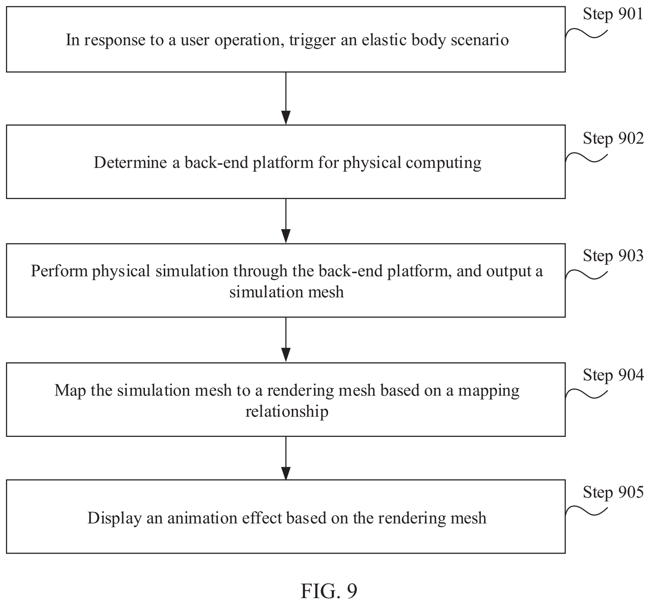

In some embodiments, as shown in FIG. 9, in response to a user operation, the application triggers an elastic body scenario (that is, step 901). For example, in response to an operation performed by the user on the lock screen button, the lock screen application determines that an animation effect needs to be displayed, and the to-be-displayed animation effect is an elastic body animation effect. Then, the application assigns real physical attributes to elastic bodies in a to-be-displayed interface through the physical engine, for example, determines programming code, scripts, and the like that implement motion, rotation, or collision response of these elastic bodies. Then, the application adaptively determines, based on a physical computing scale in a current service scenario, a back-end platform with better performance for physical computing (that is, step 902), to perform physical simulation through the determined back-end platform, and output a simulation mesh (that is, step 903). The elastic body is usually represented by a mesh in a computer.

In this way, for different physical computing scales and different computing platforms, automatic scheduling is implemented to adapt to different computing power, and performance optimization is implemented on each platform.

It should be understood that the lock screen interface is not necessarily a lock screen interface in a screen-locked state, and may alternatively be a lock screen interface in an unlocked state. In some examples, the electronic device may also be unlocked through facial recognition. In this scenario, after being unlocked, the electronic device may display an unlocked lock screen interface. In this regard, the electronic device may further display a home screen from the unlocked lock screen interface in response to an operation performed by the user on the unlocked lock screen interface, for example, a swipe-up operation or a swipe-down operation. In this process, the electronic device may display a second animation mentioned in the following embodiments, and process the elastic body of the theme according to the methods provided in the embodiments.

In some examples, a single-core CPU has a strong computing capability, and running startup is fast. A GPU has a strong parallel computing capability, and operation startup incurs additional consumption in a preparation phase. Currently, CUDA and OpenCL computing platforms are widely used in the industry. CUDA and OpenCL flexibly support various GPU and CPU implementations at a compilation level.

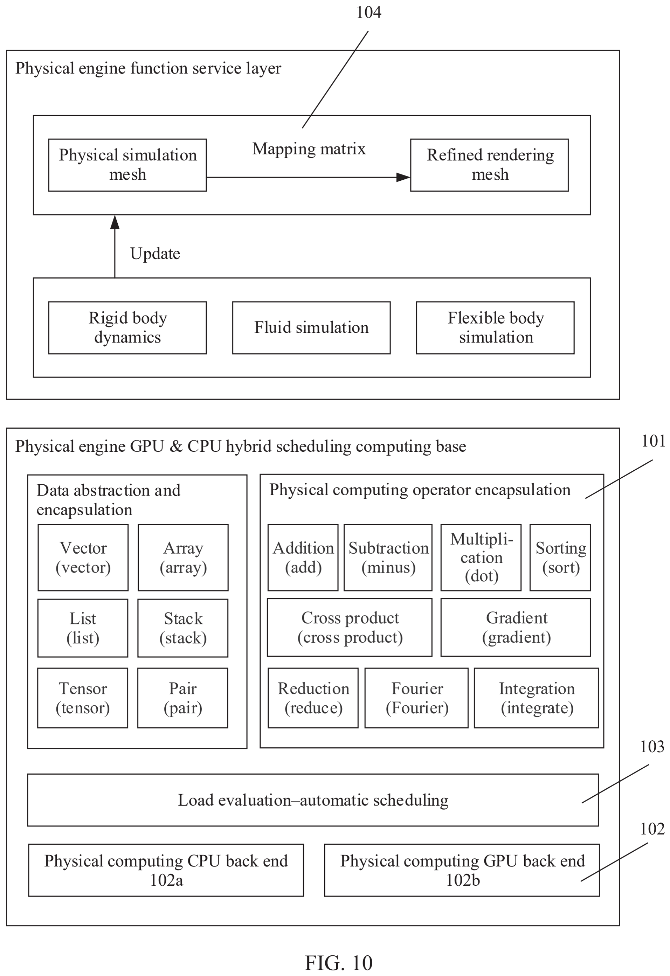

For example, as shown in FIG. 10, the physical engine is configured with a hybrid scheduling computing base of a CPU and a GPU. As shown by a reference numeral 101, in a device development phase or an application development phase, a programmer abstracts a common physical computing operator (operator), for example, abstracts and encapsulates each physical computing operator. In addition, as shown by a reference numeral 102, all abstracted and encapsulated operators can achieve two implementations: CPU and GPU implementations. For example, a physical computing back end includes a CPU back end 102a and a GPU back end 102b, and all the abstracted and encapsulated operators may be executed by the CPU back end 102a and the GPU back end 102b. The operator may also be described as an operator. The operator is a mathematical concept, and may be used to represent a mapping relationship. An element of a vector space is computed in the current vector space or another vector space based on the mapping, to obtain another element.

For example, a physical computing operator includes, for example, addition (add), subtraction (minus), multiplication (dot), sorting (sort), cross product (cross product), gradient (gradient), reduction (reduce), Fourier (Fourier) transform, and integral (integrate).

Subsequently, as shown by a reference numeral 103, when the application determines to trigger the elastic body scenario, a load evaluation-automatic scheduling module adaptively schedules an operation used for physical computing to the CPU or the GPU for execution.

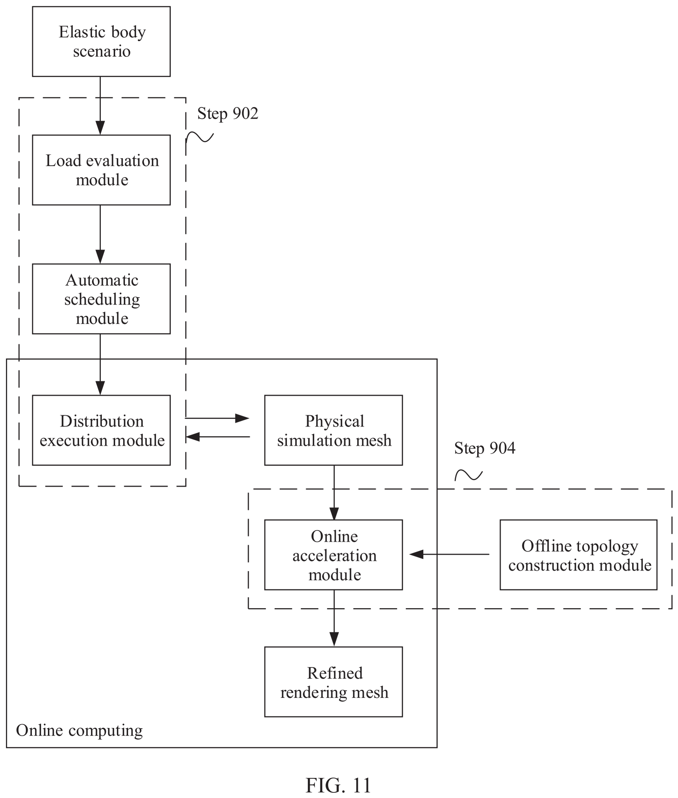

For example, as shown in FIG. 11, a process in which the application determines the back-end platform used for physical computing in step 902 includes a load evaluation phase, an automatic scheduling phase, and a distribution execution phase.

In some examples, in the load evaluation phase, a load evaluation module analyzes execution efficiency of different devices in different physical simulation scenarios, so that whether a computing operation is performed on a GPU or a CPU is dynamically adjusted in the subsequent automatic adjustment phase, to obtain better physical simulation performance.

For example, before specific physical simulation is performed, the load evaluation module first collects statistics on CPU computing time, GPU computing time, and CPU-to-GPU data transmission time that are of each operator and that need to be used in a current elastic body scenario. Mesh code of an image frame obtained by the application is stored in a memory of the CPU. Therefore, if it is determined that computing processing needs to be performed through the GPU, the part of data needs to be transmitted from the CPU to the GPU. In other words, in the load evaluation phase, the CPU-to-GPU data transmission time also needs to be considered.

For example, for an operator $i$, the load evaluation module evaluates CPU execution duration $cputime_i$, GPU execution duration $gputime_i$, and CPU-to-GPU data transmission duration $cpu2gputime_i$.

It should be understood that hardware performance of different electronic devices may be different, and therefore, computing duration of a same operator on different back-end platforms may also be different. Therefore, before a back-end platform is selected, the load evaluation module first determines actual computing duration of each operator on different back-end platforms, so that accurate back-end platform scheduling can be implemented subsequently based on the actual computing duration. Therefore, the display method provided in embodiments of this application can be adaptively applied to hardware platforms of different devices.

In some embodiments, after downloading a theme, the electronic device can obtain operators included in elastic body computing corresponding to the current theme. In the load evaluation phase, the load evaluation module needs to evaluate execution duration and data transmission duration of these operators on different back-end platforms. Elastic body computing corresponding to the theme is used to implement elastic body animation effect display on one or more interfaces to which the current theme is applied.

For example, a default theme is preset in the electronic device. Before running the default theme, for example, running the theme for the first time, the electronic device may first obtain operators included in elastic body computing corresponding to the default theme, to evaluate execution duration and data transmission duration of these operators on different back-end platforms. In this way, when the default theme is displayed subsequently, a back-end platform used for computing can be determined. For another example, after downloading a customized theme in response to a user operation, the electronic device may obtain operators included in elastic body computing corresponding to the customized theme, to evaluate execution duration and data transmission duration of these operators on different back-end platforms. In this way, when the customized theme is displayed subsequently, a back-end platform used for computing can be determined.

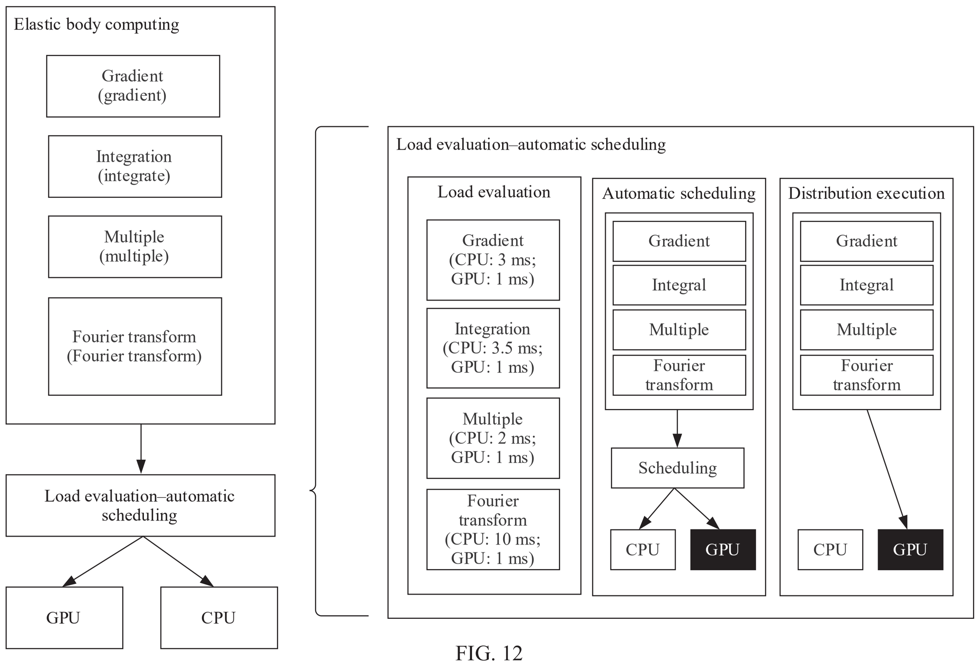

For example, as shown in FIG. 12, elastic body computing includes gradient (gradient) computing, integral (integrate) computing, multiple (multiple) computing, and Fourier transform (Fourier transform) computing. In the load evaluation phase, the load evaluation module determines that duration for the CPU to execute gradient computing is 3 milliseconds (ms), and duration for the GPU to execute gradient computing is 1 ms; duration for the CPU to execute integral computing is 3.5 ms, and duration for the GPU to execute integral computing is 1 ms; and duration for the CPU to execute multiple computing is 10 ms, and duration for the GPU to execute integral computing is 1 ms. The CPU-to-GPU data transmission duration is not shown in FIG. 12.

Then, as shown in FIG. 11, after the load evaluation phase ends, an automatic scheduling module may obtain a load evaluation result output by the load evaluation module. In this case, the automatic scheduling module may execute the automatic scheduling phase based on the load evaluation result, to determine to schedule the CPU or the GPU. For example, the automatic scheduling module obtains, through analysis by using an automatic scheduling algorithm and based on computing duration of each operator, duration consumed for computing each operator by using the GPU or by using the CPU, and determines which back-end platform consumes shorter duration for computing a specific operator, to determine which back-end platform needs to be used to process the operator. In this way, overall computing efficiency is improved, and physical performance in the elastic scenario is improved. The computing duration of the operator includes the CPU computing duration, the GPU computing duration, and the CPU-to-GPU data transmission duration that are of the operator and that are previously determined by the load evaluation module.

For example, the automatic scheduling module determines a scheduling back-end platform based on a quantity of vertices of the elastic body included in the image frame and duration of each operator that needs to be used. The elastic body is usually represented by a mesh in a computer, and the mesh has a corresponding quantity of vertices. As shown in FIG. 12, in the current elastic body scenario, related elastic body computing includes gradient computing, integral computing, multiple computing, and Fourier transform computing. In the automatic scheduling phase, the automatic scheduling module computes computing duration of each operator on the CPU and computing duration of each operator on the GPU based on the quantity of vertices of the elastic body, to determine a scheduling result. For example, in the current elastic body scenario, according to the following formula (1), the automatic scheduling module determines that gradient computing, integral computing, multiple computing, and Fourier transform computing can consume shorter duration for computing by using the GPU. Therefore, the automatic scheduling module may indicate a distribution execution module to invoke the GPU to perform computing.

$$\min\left(\sum_0^n \text{stepTime}_i(\text{cputime}_i, \text{gputime}_i, \text{cpu2gputime}_i,)\right) \tag{1}$$

where $\text{stepTime}_i(\text{cputime}_i, \text{gputime}_i, \text{cpu2gputime}_i,) = (\textit{cuptime}|\text{gputime}) + 0^{\textit{statusi\#statusi+1}} \times \textit{cup2gputime}$.

For example, in the formula (1), in a process in which the CPU performs computing, a status (status) of an operator before and after computing does not change, that is, $status_i = status_{i+1}$. In this case, CPU computing duration of an operator i is $\text{stepTime}_i = \textit{cuptime} + 0^1 \times \textit{cup2gputime} = \textit{cuptime}$. In a process in which the GPU performs computing, because the operator needs to be transmitted from the CPU to the GPU, a status of the operator before and after computing changes, that is, $status_i \neq status_{i+1}$. In this case, GPU computing duration of the operator i is $\text{stepTime}_i = \text{gputime} + 0° \times \textit{cup2gputime} = \text{gputime} + \textit{cup2gputime}$.

Then, as shown in FIG. 11, after the automatic scheduling phase ends, the distribution execution module can obtain a scheduling result output by the automatic scheduling module. The scheduling result indicates a back-end platform on which each operator needs to run. For example, as shown in FIG. 12, the distribution execution module indicates each operator to run on the GPU based on the scheduling result, and the GPU performs computing.

Currently, only a programmer is allowed to specify whether a program is compiled into CPU code or GPU code in a development phase. According to the display processing method provided in embodiments of this application, a back-end platform used for computing can be dynamically switched during running, and a back-end platform with better performance can be automatically selected based on different hardware platforms and computing scales in different service scenarios, to implement physical simulation with a better effect.

For example, according to the method for adaptively scheduling a back-end platform, the electronic device can adaptively schedule, in a low-load small-scale scenario, a CPU back-end platform to perform computing, and in a high-load large-scale scenario, a GPU back-end platform to perform computing.

The following uses an experimental scenario as an example to describe an effect of the method for adaptively scheduling a back-end platform.

For example, based on an elastic body collision physical simulation application, a physical computing operator includes an integral operator, a sampling operator, a difference operator, a linear equation operator, a spatial gradient operator, matrix dot multiplication, and matrix cross multiplication. The following test verification scenario is designed through 100 iterations to correspond to a multi-vertex computing process.

In some examples, in a test scenario 1 shown in Table 3 below, in a same-scale load scenario, a test is executed separately on a test machine 1 and a test machine 2 to test whether computing power can be scheduled to run to achieve better performance. For example, as shown in Table 3 below, CPU performance of the test machine 1 is the same as that of the test machine 2. The test machine 1 compares the CPU performance with GPU performance to determine to schedule the CPU. For example, CPU computing duration of the test machine 1 is short. The test machine 2 compares the CPU performance with GPU performance to determine to schedule the GPU. For example, GPU computing duration of the test machine 2 is short. It can be learned that different test machines can adaptively schedule a back-end platform with better computing power.

Table 3

| Test scenario 1 | CPU performance | GPU performance | Scheduling result |
|---|---|---|---|
| Test machine 1 | 2460 ms | 3080 ms | CPU |
| Test machine 2 | 2460 ms | 2030 ms | GPU |

In some examples, in a test scenario 2 shown in Table 4 below, different load scenarios are run on the test machine 1. For example, a 4x4 low-load elastic body falling collision scenario and a 12x12 high-load elastic body falling collision scenario are separately run to test whether computing power can be scheduled to run to achieve better performance. For example, as shown in the Table 4 below, in the 4x4 low-load elastic body falling collision scenario, the test machine 1 compares CPU performance with GPU performance to determine to schedule the CPU. For example, in the low-load elastic body falling collision scenario, CPU computing duration is short. In the 12x12 high-load elastic body falling collision scenario, the test machine 1 compares CPU performance with GPU performance to determine to schedule the GPU. For example, in the high-load elastic body falling collision scenario, GPU computing duration is short. It can be learned that the same test machine can adaptively schedule a back-end platform with better computing power based on different load scenarios.

Table 4

| Test scenario 2 | CPU performance | GPU performance | Scheduling result |
|---|---|---|---|
| 4x4 | 2460 ms | 3080 ms | CPU |
| 12x12 | 3370 ms | 2954 ms | GPU |

In some embodiments, the application determines the back-end platform according to the method, and performs computing through the back-end platform. The elastic body is usually represented by a mesh in a computer. In this case, in the elastic body scenario, the back-end platform may output a simulation mesh. The simulation mesh is a coarse-grained mesh, and cannot obtain a good display effect. However, currently, the user has a high requirement for a high-quality exquisite effect of the electronic device. Therefore, the electronic device needs to process the simulation mesh, to obtain a rendering mesh that is with a finer granularity and that can implement a better display effect.

In some examples, the simulation mesh may also be described as a physical topology mesh.

The following describes a process of converting the simulation mesh into the rendering mesh.

In some embodiments, multi-level subdivision is performed on a simulation mesh with a coarser granularity, so that a rendering mesh with a finer granularity may be obtained. Therefore, in the development phase, the programmer may pre-establish a mapping relationship between the simulation mesh and the rendering mesh, and directly preset the mapping relationship in the electronic device. In this way, when needing to perform mesh subdivision, the electronic device can directly determine, based on the mapping relationship, the rendering mesh corresponding to the current simulation mesh. In this way, the resolution is improved, the display effect is improved, and subdivision processing load is reduced.

For example, as shown by a reference numeral 104 shown in FIG. 10, a mapping matrix that is between the simulation mesh and the rendering mesh and that is computed offline is preset at a physical engine function service layer, and the mapping matrix indicates the mapping relationship between the simulation mesh and the rendering mesh.

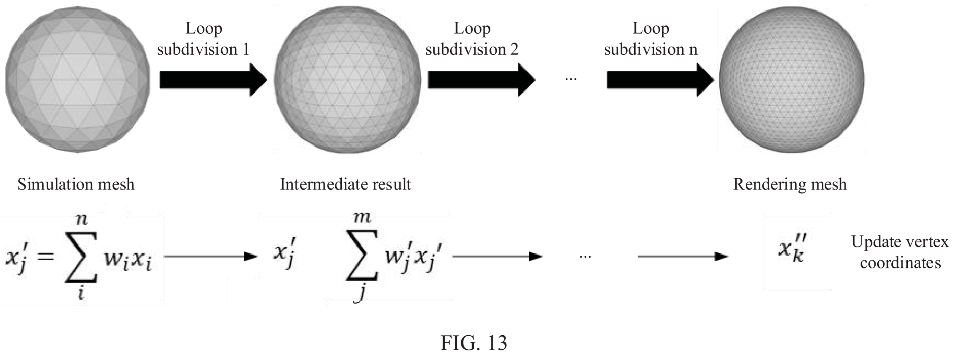

As shown in FIG. 11, in a topology construction phase, an offline topology construction module offline creates a mapping relationship between the simulation mesh and the rendering mesh. For example, the offline topology construction module performs subdivision on the simulation mesh to obtain a high-resolution rendering mesh. As shown in FIG. 13, after obtaining the simulation mesh, the offline topology construction module performs cyclic subdivision for a plurality of times, to output a rendering mesh that meets a frame rate requirement.

In some examples, the offline topology construction module defines x as a vertex of an original simulation mesh, and x' as a vertex of a mesh obtained after next subdivision, and a mapping relationship between x and x' is

$$x_j' = \sum_i^n w_i x_i$$ . $x_j'$ is a vertex of a $j^{th}$ subdivided mesh, and is related to vertices of n original simulation meshes, $x_i$ is a vertex of an $i^{th}$ related simulation mesh, and $w_i$ is a corresponding weight coefficient.

Then, the offline topology construction module sequentially substitutes previous coarse-mesh vertices into a next fine-mesh vertex. As shown in FIG. 13, the offline topology construction module determines, based on coordinates $x_j' = \sum_i^n w_i x_i$ of the vertex of the original simulation mesh, that vertex coordinates of a mesh obtained after first cyclic subdivision are $x_j' = \sum_j^m w_j' x_j'$, thereby implementing a first update of the vertex coordinates. Then, in a process of cyclic subdivision for n times, the offline topology construction module sequentially updates the mesh vertex coordinates. Finally, the offline topology construction module may establish a relationship between vertices x of all original simulation meshes and vertices x" of all final rendering meshes, as shown in the following, thereby obtaining a mapping matrix w:

$$x_k'' = \sum_i^n w_j' \ (\sum_j^m w_i x_i) \ = \sum_k^n \widetilde{w_k} x_k \longrightarrow \begin{bmatrix} w_1 & \cdots & w_n \end{bmatrix} \begin{bmatrix} x_1 \\ \cdots \\ x_n \end{bmatrix} = \begin{bmatrix} x_1'' \\ \cdots \\ x_k'' \end{bmatrix} \longrightarrow w^T x = x''$$

In some embodiments, after the electronic device triggers an elastic body display scenario and outputs the simulation mesh through the back-end platform, as shown in FIG. 9, the simulation mesh may be mapped to the rendering mesh based on the preset mapping relationship, thereby implementing animation effect display based on the rendering mesh (that is, step 904 and step 905). In this way, based on the mapping relationship, a mesh updated after physical simulation is mapped to a high-resolution rendering mesh at a time for each frame, to reduce subdivision processing load.

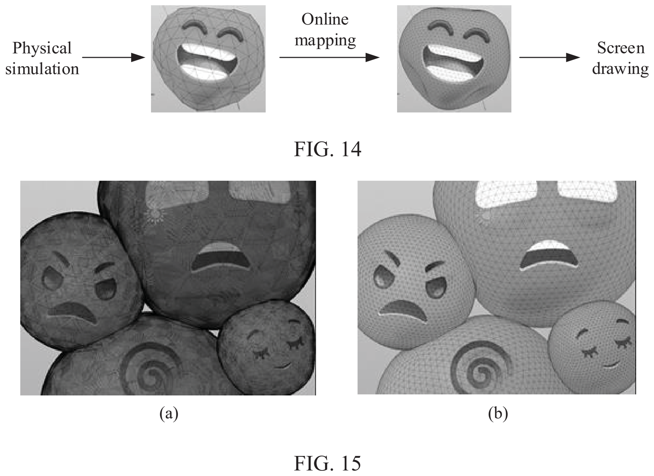

For example, as shown in FIG. 11, in an online computing process, the distribution execution module schedules a back-end platform to perform computing, and outputs a physical simulation mesh. Then, an online acceleration module can obtain the mapping relationship preset by the offline topology construction module, and directly map, based on the mapping relationship, the physical simulation mesh to a refined rendering mesh. As shown in FIG. 14, through simple mapping processing based on the mapping relationship, the application can also obtain a rendering mesh with a high resolution without the need to perform cyclic subdivision for a plurality of times, to implement a better display effect.

In an existing tessellation shader, subdivision can be implemented only by modifying an interpolated vertex to allow a generated surface to follow a mesh normal, resulting in generating additional subdivision processing load. According to the display processing method provided in embodiments of this application, the simulation mesh can be directly mapped to the rendering mesh at a time based on the offline preset mapping relationship, so that subdivision processing load is reduced while a subdivision effect is ensured.

In addition, the mapping relationship between the simulation mesh and the rendering mesh is established in an offline process. Therefore, an original vertex of the simulation mesh can be modified to obtain the rendering mesh with a more delicate and smooth effect.

In addition, the display processing method provided in embodiments of this application does not depend on a GPU hardware type, to avoid that compilers of different types may cause different subdivision effects.

It should be understood that, in some scenarios, the programmer pre-specifies a back-end platform. In this case, after a simulation mesh is output by the specified back-end platform, the electronic device may also map the simulation mesh to a rendering mesh based on the mapping relationship. That is, the method for adaptively scheduling a back-end platform and the method for obtaining a rendering mesh based on a mapping relationship may be separately performed, or may be jointly performed. This is not limited in embodiments of this application.

The following uses an experimental scenario as an example to describe an effect of the method for obtaining a rendering mesh based on a mapping relationship.

For example, on a same electronic device, in a same elastic body collision scenario, the following three methods for computing a rendering mesh are respectively used to compare performance of the electronic device, a resolution of the rendering mesh, and a subdivision effect: a GPU-end tessellation shader, a CPU-end classic Loop subdivision method, and the mapping method provided in embodiments of this application. As shown in Table 5 below, items for measuring performance of the electronic device include a frame rate, a power consumption increment, and a double rate (double data rate, DDR) frequency.

Table 5

| Result | GPU-end tessellation shader | CPU-end classic Loop subdivision method | Mapping method |
|---|---|---|---|
| Frame rate (FPS) | 56.1 | 12.0 | 58.5 |
| Power consumption increment | 124 | Frame rates differ greatly, and therefore no comparison is made. | 57 |

(continued)

| Result | GPU-end tessellation shader | CPU-end classic Loop subdivision method | Mapping method |
|---|---|---|---|
| DDR frequency | 1641.2 | 2133.0 | 1167.9 |

It can be learned from an experiment result shown in Table 5 above that, in the mapping method provided in embodiments of this application, a power consumption gain is 67 and the DDR frequency is reduced by 473 in comparison with the GPU-end tessellation shader; and the frame rate is increased by 46.5 FPS and the DDR frequency is reduced by 965.1 in comparison with the CPU-end classic Loop subdivision method. In addition, the CPU-end classic Loop subdivision method has a frame rate of only 12 FPS with severe frame drops, and cannot be applied to a real-time scenario of the electronic device. Therefore, the experiment result does not compare power consumption increments of the mapping method and the subdivision method.

In addition, (a) in FIG. 15 shows a display effect after the rendering mesh is obtained according to the CPU-end classic Loop subdivision method. (b) in FIG. 15 shows a display effect after the rendering mesh is obtained according to the mapping method provided in embodiments of this application. It can be obviously learned that a better subdivision effect can be obtained according to the mapping method provided in embodiments of this application, so that a better display effect can be obtained.

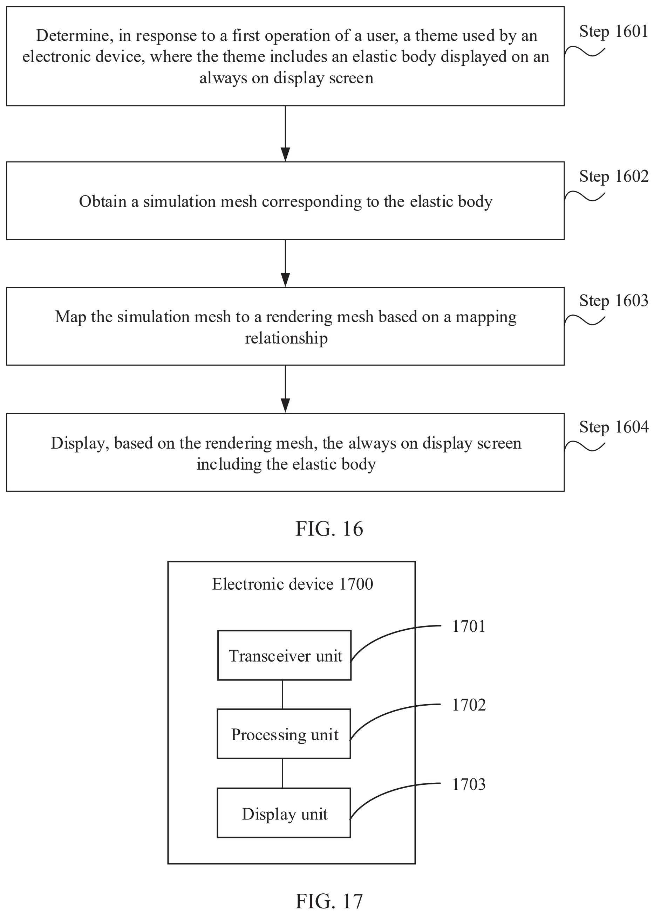

FIG. 16 is a schematic flowchart of a display processing method according to an embodiment of this application. It should be noted that the method is not limited to a specific sequence described in FIG. 16 and below. It should be understood that, in another embodiment, sequences of some steps in the method may be mutually exchanged according to an actual requirement, or some steps in the method may be omitted or deleted. The method includes the following steps.

Step 1601: An electronic device determines, in response to a first operation of a user, a theme used by the electronic device, where the theme includes an elastic body displayed on an always on display screen.

In some examples, the first operation is, for example, a tap operation performed by the user on a display when the electronic device is in a black-screen state, or an operation of the user approaching the electronic device. After the user approaches the electronic device, the operation can be detected by a sensor of the electronic device, to determine that the user needs to wake up the phone.

In some embodiments, after detecting the first operation of the user, the electronic device determines that the always on display screen needs to be displayed. In some examples, the electronic device is configured with a theme function, and the theme function may be used to set display of a phase such as an always on display screen, a lock screen interface, or a home screen. For example, the elastic body is displayed on the always on display screen. In some examples, display content and display effects of different themes may be different. In this case, after detecting the first operation of the user, the electronic device may determine the elastic body that is displayed on the always on display screen and that is indicated in the theme currently used by the electronic device.

Step 1602: The electronic device obtains a simulation mesh corresponding to the elastic body.

In some embodiments, after obtaining the elastic body, the electronic device may determine to trigger simulation on the elastic body, to output the simulation mesh. In some examples, the electronic device may simulate the elastic body through a first platform and/or a second platform. To improve simulation efficiency and improve performance of the electronic device, the electronic device may select a platform that can consume shorter duration to simulate the elastic body.

In some examples, the following describes in detail a platform selection process in a simulation process by using an example in which the first platform is a CPU and the second platform is a GPU. It should be understood that, in another example, the first platform may alternatively be a GPU, and the second platform may alternatively be a CPU.

In some embodiments, the electronic device obtains first simulation duration for the first platform of the electronic device to simulate the elastic body and second simulation duration for the second platform of the electronic device to simulate the elastic body. Then, the electronic device invokes, based on the first simulation duration and the second simulation duration, the first platform and/or the second platform to simulate the elastic body.

For example, when the first simulation duration is less than the second simulation duration, the electronic device invokes the first platform to simulate the elastic body. That is, it consumes shorter duration when the first platform simulates the elastic body alone. Therefore, the electronic device may choose to invoke the first platform to simulate the elastic body.

For another example, when the second simulation duration is less than the first simulation duration, the electronic device invokes the second platform to simulate the elastic body. That is, it consumes shorter duration when the second platform simulates the elastic body alone. Therefore, the electronic device may choose to invoke the second platform to simulate the elastic body.

For another example, when third simulation duration is less than the first simulation duration and the second simulation duration, the electronic device invokes the first platform and the second platform to simulate the elastic body.

The third simulation duration is simulation duration that is determined based on the first simulation duration and the second simulation duration and that is required when the first platform and the second platform are invoked to perform cooperative simulation on the elastic body. That is, it consumes shorter duration when the first platform and the second platform perform cooperative simulation on the elastic body. Therefore, the electronic device may choose to invoke the first platform and the second platform to simulate the elastic body.

For example, as shown in FIG. 10, a lower layer of a physical engine includes a hybrid scheduling computing base of a GPU and a CPU, and an encapsulated operator may be operated by using the GPU or the CPU. In this case, after the GPU executes an operator operation, the simulation mesh may be uploaded to a physical engine service layer that is at an upper layer for processing. Alternatively, after the CPU executes an operator operation, the simulation mesh may be uploaded to a physical engine service layer that is at an upper layer for processing. Alternatively, after the GPU and the CPU separately execute an operator operation, respective simulation results may be separately uploaded to a physical engine service layer that is at an upper layer. After processing the obtained simulation result of the GPU and the obtained simulation result of the CPU, the physical engine may obtain the simulation mesh.

In some embodiments, after detecting the first operation of the user and determining the theme used by the electronic device, the electronic device can obtain N types of operators that need to be used and that correspond to the theme, where N is a positive integer. Then, the electronic device may obtain first computing duration for the first platform to execute each operator in the N types of operators, second computing duration for the second platform to execute each operator in the N types of operators, and data transmission duration from the first platform to the second platform.

For example, as shown in FIG. 12, the N types of operators that correspond to the theme and that are obtained by the electronic device are gradient computing, integral computing, multiple computing, and Fourier transform computing. In this case, the electronic device may determine the first computing duration for the first platform to separately execute gradient computing, integral computing, multiple computing, and Fourier transform computing, and the second computing duration for the second platform to separately execute gradient computing, integral computing, multiple computing, and Fourier transform computing, and determine the data transmission duration of each operator in the N types of operators from the first platform to the second platform.

In this way, before selecting a platform, the electronic device first determines actual computing duration of different platforms for each operator, so that accurate platform scheduling can be implemented subsequently based on the actual computing duration, and therefore adaptive application to hardware platforms of different devices is implemented.

In some embodiments, when determining that the elastic body needs to be simulated, the electronic device may obtain a quantity of operators of the N types of operators corresponding to the elastic body. For example, the elastic body to be simulated needs M times of gradient computing, and a quantity of operators for gradient computing is M, where M is a positive integer. Then, the electronic device obtains, based on the quantity of operators and the first computing duration, first duration for the first platform to separately execute the N types of operators; and obtains, based on the quantity of operators, the second computing duration, and the data transmission duration, second duration for the second platform to separately execute the N types of operators, where the second duration includes accumulated transmission duration for transmitting each operator in the N types of operators from the first platform to the second platform. Then, the electronic device determines the first simulation duration based on the first duration; and determines the second simulation duration based on the second duration.

In some examples, the electronic device determines that the first duration corresponding to a first-type operator in the N types of operators is less than the second duration, and invokes the first platform to execute the first-type operator. The electronic device determines that the second duration corresponding to a second-type operator in the N types of operators is less than the first duration, and invokes the second platform to execute the second-type operator.

For example, as shown in FIG. 12, the electronic device determines that the first duration for the CPU to execute gradient computing is 3 ms, and the second duration for the GPU to execute gradient computing is 1 ms; the first duration for the CPU to execute integral computing is 3.5 ms, and the second duration for the GPU to execute integral computing is 1 ms; and the first duration for the CPU to execute multiple computing is 10 ms, and the second duration for the GPU to execute integral computing is 1 ms. In this case, the electronic device may determine that the first simulation duration for invoking the CPU to simulate the elastic body is 16.5 ms (3 ms + 3.5 ms + 10 ms), and the first simulation duration for invoking the GPU to simulate the elastic body is 3 ms (1 ms + 1 ms + 1 ms). In this case, based on the second simulation duration being less than the first simulation duration, the electronic device may determine to invoke the GPU to simulate the elastic body, to obtain the simulation mesh.

For another example, the electronic device determines that the first duration for the CPU to execute gradient computing is 3 ms, and the second duration for the GPU to execute gradient computing is 1 ms; the first duration for the CPU to execute integral computing is 3.5 ms, and the second duration for the GPU to execute integral computing is 1 ms; and the first duration for the CPU to execute multiple computing is 1 ms, and the second duration for the GPU to execute integral computing is 10 ms. In this case, the electronic device may determine that the first-type operator is multiple computing, the second-type operator is gradient computing and integral computing, and a sum of duration for the first platform to execute the first-type operator and duration for the second platform to execute the second-type operator is 3 ms (1 ms + 1 ms + 1 ms). In this case, the electronic device may determine to invoke the CPU to execute multiple computing, and invoke the GPU to execute gradient computing and integral computing. In this way, the CPU and the GPU complete cooperative simulation on the elastic body with shorter duration, to output the simulation mesh, thereby improving simulation efficiency.

Currently, only a programmer is allowed to specify whether a program is compiled into CPU code or GPU code in a development phase. According to the display processing method provided in embodiments of this application, a platform used for computing can be dynamically switched during running, and a platform with better performance can be automatically selected based on different hardware platforms and computing scales in different service scenarios, to implement physical simulation with a better effect.

Step 1603: The electronic device maps the simulation mesh to a rendering mesh based on a mapping relationship.

In some embodiments, before the electronic device is used for the first time, the electronic device can obtain and store the mapping relationship. The mapping relationship includes a mapping matrix used to convert the simulation mesh into the rendering mesh.

For example, as shown in FIG. 11, in a development phase, a programmer may offline create a mapping relationship between a simulation mesh and a rendering mesh by using an offline topology construction module, and directly preset the mapping relationship in the electronic device.

In this way, the electronic device maps, based on the mapping relationship, a simulation mesh updated after physical simulation to a high-resolution rendering mesh at a time for each frame, to reduce subdivision processing load.

In an existing tessellation shader, subdivision can be implemented only by modifying an interpolated vertex to allow a generated surface to follow a mesh normal, resulting in generating additional subdivision processing load. According to the display processing method provided in embodiments of this application, the electronic device can directly map the simulation mesh to the rendering mesh at a time based on the offline preset mapping relationship, so that subdivision processing load is reduced while a subdivision effect is ensured.

In addition, the mapping relationship between the simulation mesh and the rendering mesh is established in an offline process. Therefore, an original vertex of the simulation mesh can be modified to obtain the rendering mesh with a more delicate and smooth effect.

In addition, the display processing method provided in embodiments of this application does not depend on a GPU hardware type, to avoid that compilers of different types may cause different subdivision effects.

Step 1604: The electronic device displays, based on the rendering mesh, the always on display screen including the elastic body.

In some embodiments, after obtaining the rendering mesh, the electronic device can execute a subsequent drawing and rendering process of the elastic body, and then send, through layer synthesis, a synthesized image frame to the display for displaying. In this way, the electronic device can display the always on display screen including the elastic body.

For example, as shown in FIG. 6(a), in a process of being in a black-screen state, the electronic device detects the first operation performed by the user on the display, obtains a moving-ball theme currently used by the electronic device, and obtains an elastic ball that is included in the moving-ball theme and that is displayed on the always on display screen. After the elastic ball is simulated through the adaptive selection platform in step 1602 to obtain the simulation mesh, and the simulation mesh is directly mapped to the rendering mesh based on the mapping relationship in step 1603, the always on display screen including the elastic ball shown in the function window 61 can be displayed based on the rendering mesh, as shown in FIG. 6(b).

For another example, in a process of displaying the always on display screen, the electronic device detects a second operation performed by the user on the always on display screen, and invokes the first platform and/or the second platform to simulate the elastic body. The electronic device displays a first animation of the elastic body from the always on display screen to the lock screen interface. Then, the electronic device may display the lock screen interface including the elastic body. Then, in a process of displaying the lock screen interface, the electronic device detects a third operation performed by the user on the lock screen interface, and invokes the first platform and/or the second platform to simulate the elastic body. The electronic device displays a second animation of the elastic body from the lock screen interface to a home screen. Then, the electronic device displays the home screen.

For example, as shown in FIG. 6(c), in a process of displaying the always on display screen, the electronic device detects the second operation performed by the user on the display, and may invoke the first platform and/or the second platform to simulate the elastic body, to display the first animation of the elastic ball from the always on display screen to the lock screen interface, as shown in FIG. 7(a). Then, the electronic device may display the lock screen interface that includes the elastic ball and that is shown in FIG. 7(b).

In some examples, in a process of displaying the first animation, displaying the lock screen interface including the elastic body, and displaying the second animation, a platform invoked by the electronic device is the same as a platform invoked by the electronic device in a process of displaying the always on display screen including the elastic body.

In this way, after allocating, based on the elastic body included in the theme, the platform used to simulate the elastic body, the electronic device can continuously invoke the same platform to simulate the elastic body that is displayed on a plurality of interfaces and that is included in the same theme. Based on consistency of display effects of the theme on interfaces in different phases, display effects and display processing efficiency can be ensured, and unnecessary repeated platform selection can be avoided.

The display processing method provided in embodiments of this application is described in detail above with reference to FIG. 6(a), FIG. 6(b), FIG. 6(c) to FIG. 16. The following describes in detail an electronic device provided in an embodiment of this application with reference to FIG. 17.

In a possible design, FIG. 17 is a diagram of a structure of an electronic device according to an embodiment of this application. As shown in FIG. 17, the electronic device 1700 includes a transceiver unit 1701, a processing unit 1702, and a display unit 1703. The electronic device 1700 may be configured to implement a function of the electronic device in the foregoing method embodiments.

Optionally, the transceiver unit 1701 is configured to support the electronic device 1700 in performing step 901 in FIG. 9, and/or is configured to support the electronic device 1700 in performing step 1601 in FIG. 16.

Optionally, the processing unit 1702 is configured to support the electronic device 1700 in performing step 902, step 903, and step 904 in FIG. 9, and/or is configured to support the electronic device 1700 in performing step 1602 and step 1603 in FIG. 16.

Optionally, the display unit 1703 is configured to support the electronic device 1700 in performing step 905 in FIG. 9, and/or is configured to support the electronic device 1700 in performing step 1604 in FIG. 16.

The transceiver unit may include a receiving unit and a sending unit, may be implemented by a transceiver or a transceiver-related circuit component, and may be a transceiver or a transceiver module. Operations and/or functions of the units in the electronic device 1700 are separately intended to implement corresponding procedures of the display processing method in the foregoing method embodiments. All related content of the steps in the foregoing method embodiments may be referenced to function descriptions of corresponding functional units. For brevity, details are not described herein again.

Optionally, the electronic device 1700 shown in FIG. 17 may further include a storage unit (not shown in FIG. 17), and the storage unit stores a program or instructions. When the transceiver unit 1701, the processing unit 1702, and the display unit 1703 execute the program or the instructions, the electronic device 1700 shown in FIG. 17 is enabled to perform the display processing method in the foregoing method embodiments.

For technical effects of the electronic device 1700 shown in FIG. 17, refer to the technical effects of the display processing method in the foregoing method embodiments. Details are not described herein again.

In addition to a form of the electronic device 1700, the technical solutions provided in this application may also be a functional unit or a chip in the electronic device, or an apparatus used in combination with the electronic device.

An embodiment of this application further provides a chip system, including a processor. The processor is coupled to a memory, and the memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed and completed by a hardware processor, or may be performed and completed through a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the display processing method in the foregoing embodiments.

An embodiment of this application further provides a computer program product. When the computer program product runs on a computer, the computer is enabled to perform the foregoing related steps, to implement the display processing method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is enabled to perform the display processing method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above. Details are not described herein again.

Methods or algorithm steps described in combination with the content disclosed in embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

The description of the foregoing implementations allows a person skilled in the art to clearly understand that, for the purpose of convenient and brief description, division of the foregoing functional modules is used as merely an example for description. During actual application, the foregoing functions can be allocated to different functional modules for implementation based on a requirement. That is, an internal structure of the apparatus is divided into different functional modules to implement all or some of the functions described above. For a detailed working process of the foregoing system, apparatus, and unit, refer to a corresponding process in the foregoing method embodiments. Details are not described herein again.

In the several embodiments provided in this application, it should be understood that the disclosed methods may be implemented in other manners. The apparatus embodiment described above is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electronic, mechanical, or other forms.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The computer-readable storage medium includes but is not limited to any one of the following: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1.  A display processing method, applied to an electronic device, wherein the method comprises:

    determining, in response to a first operation of a user, a theme used by the electronic device, wherein the theme comprises an elastic body displayed on an always on display screen;
    obtaining a simulation mesh corresponding to the elastic body;
    mapping the simulation mesh to a rendering mesh based on a mapping relationship; and
    displaying, based on the rendering mesh, the always on display screen comprising the elastic body.

2. The method according to claim 1, wherein obtaining the simulation mesh corresponding to the elastic body comprises:

obtaining first simulation duration for a first platform of the electronic device to simulate the elastic body and second simulation duration for a second platform of the electronic device to simulate the elastic body; and invoking, based on the first simulation duration and the second simulation duration, the first platform and/or the second platform to simulate the elastic body.

3. The method according to claim 2, wherein invoking, based on the first simulation duration and the second simulation duration, the first platform and/or the second platform to simulate the elastic body comprises:

when the first simulation duration is less than the second simulation duration, invoking the first platform to simulate the elastic body;
or
when the second simulation duration is less than the first simulation duration, invoking the second platform to simulate the elastic body;
or
when third simulation duration is less than the first simulation duration and the second simulation duration, invoking the first platform and the second platform to simulate the elastic body, wherein the third simulation duration is simulation duration that is determined based on the first simulation duration and the second simulation duration and that is required when the first platform and the second platform are invoked to perform cooperative simulation on the elastic body.

4. The method according to claim 2 or 3, wherein before obtaining the first simulation duration for the first platform to simulate the elastic body and the second simulation duration for the second platform to simulate the elastic body, the method further comprises:

obtaining N types of operators corresponding to the theme, wherein N is a positive integer; and
obtaining first computing duration for the first platform to execute each operator in the N types of operators, second computing duration for the second platform to execute each operator in the N types of operators, and data transmission duration for each operator in the N types of operators from the first platform to the second platform.

5. The method according to claim 4, wherein obtaining the first simulation duration for the first platform to simulate the elastic body and the second simulation duration for the second platform to simulate the elastic body comprises:

obtaining a quantity of operators of the N types of operators corresponding to the elastic body;
obtaining, based on the quantity of operators and the first computing duration, first duration for the first platform to separately execute the N types of operators;
obtaining, based on the quantity of operators, the second computing duration, and the data transmission duration, second duration for the second platform to separately execute the N types of operators, wherein the second duration comprises accumulated transmission duration for transmitting each operator in the N types of operators from the first platform to the second platform;
determining the first simulation duration based on the first duration; and
determining the second simulation duration based on the second duration.

6. The method according to claim 5, wherein the method further comprises:

determining that the first duration corresponding to a first-type operator in the N types of operators is less than the second duration, and invoking the first platform to execute the first-type operator; and
determining that the second duration corresponding to a second-type operator in the N types of operators is less than the first duration, and invoking the second platform to execute the second-type operator.

7. The method according to any one of claims 1 to 6, wherein the method further comprises:

detecting a second operation performed by the user on the always on display screen, and invoking the first platform and/or the second platform to simulate the elastic body;
displaying a first animation of the elastic body from the always on display screen to a lock screen interface; and
displaying the lock screen interface comprising the elastic body.

8. The method according to claim 7, wherein the method further comprises:

detecting a third operation performed by the user on the lock screen interface, and invoking the first platform and/or the second platform to simulate the elastic body;
displaying a second animation of the elastic body from the lock screen interface to a home screen; and
displaying the home screen.

9. The method according to claim 7 or 8, wherein in a process of displaying the first animation, displaying the lock screen interface comprising the elastic body, and displaying the second animation, a platform invoked by the electronic device is the same as a platform invoked by the electronic device in a process of displaying the always on display screen comprising the elastic body.

10. The method according to any one of claims 1 to 9, wherein before determining, in response to the first operation of the user, the theme used by the electronic device, the method further comprises:
obtaining and storing the mapping relationship, wherein the mapping relationship comprises a mapping matrix used to convert the simulation mesh into the rendering mesh.

11. An electronic device, comprising a processor, a memory, and a display, wherein the memory and the display are coupled to the processor, the memory is configured to store computer program code, and the computer program code comprises computer instructions; and when the processor reads the computer instructions from the memory, the electronic device is enabled to perform the method according to any one of claims 1 to 10.

12. A computer-readable storage medium, wherein the computer-readable storage medium comprises a computer program; and when the computer program is run on an electronic device, the electronic device is enabled to perform the method according to any one of claims 1 to 10.

13. A computer program product, wherein when the computer program product runs on a computer, the computer is enabled to perform the method according to any one of claims 1 to 10.

Physical engine

Rigid body physics

Collision

Constraint

Rigid body dynamics

Fluid physics

Euler method fluid

Lagrangian method

Mixed method

Elastic body physics

Cloth simulation

Hair simulation

Compute unified device architecture (CUDA) library

Integrated CPU+GPU code

CUDA compiler

CUDA computing component

Integrated CPU+GPU code

CUDA driver & runtime

Debugger and analyzer

C compiler

GPU

CPU

FIG. 1

```
┌─────────────────────────────┐
│  A programmer specifies a GPU │
│  or a CPU for compilation in  │
│      development time         │
└─────────────────────────────┘
              │
              ▼
┌─────────────────────────────┐
│  An implementation layer of a │
│   physical engine invokes a   │
│  physical simulation function │
└─────────────────────────────┘
              │
              ▼
          ◇ Whether to select ◇
   Yes ◇  a GPU back end  ◇ No
```

A programmer specifies a GPU or a CPU for compilation in development time

An implementation layer of a physical engine invokes a physical simulation function

Whether to select a GPU back end

Yes

No

Transmit data from the CPU to the GPU

Perform computing on the CPU

Perform computing on the GPU

Output a simulation result

FIG. 2

CPU vertex/image data

↓

CPU vertex buffer

↓

Vertex shader

↓

Tessellation shader

↓

Geometry shader

↓

Fragment shader

↓

Frame buffer

↓

Screen

Tessellation control shader

↓

Tessellation generator

↓

Tessellation compute shader

FIG. 3

(a) → (b)

FIG. 4

Electronic device 100

FIG. 5

FIG. 6(a)

FIG. 6(b)

FIG. 6(c)

FIG. 7(a)

08:00

Thursday, January 1

FIG. 7(b)

FIG. 8(a)

5G 5G 8:00

**08:00**

Thursday, January 1

61

FIG. 8(b)

In response to a user operation, trigger an elastic body scenario | Step 901

Determine a back-end platform for physical computing | Step 902

Perform physical simulation through the back-end platform, and output a simulation mesh | Step 903

Map the simulation mesh to a rendering mesh based on a mapping relationship | Step 904

Display an animation effect based on the rendering mesh | Step 905

FIG. 9

104

**Physical engine function service layer**

Physical simulation mesh → Mapping matrix → Refined rendering mesh

Update

Rigid body dynamics | Fluid simulation | Flexible body simulation

**Physical engine GPU & CPU hybrid scheduling computing base**

101

Data abstraction and encapsulation

| Vector (vector) | Array (array) |
| List (list) | Stack (stack) |
| Tensor (tensor) | Pair (pair) |

Physical computing operator encapsulation

| Addition (add) | Subtraction (minus) | Multiplication (dot) | Sorting (sort) |
| Cross product (cross product) | | Gradient (gradient) | |
| Reduction (reduce) | Fourier (Fourier) | Integration (integrate) | |

103

Load evaluation–automatic scheduling

102

Physical computing CPU back end 102a | Physical computing GPU back end 102b

FIG. 10

FIG. 11

EP 4 657 362 A1

## Elastic body computing

- Gradient (gradient)
- Integration (integrate)
- Multiple (multiple)
- Fourier transform (Fourier transform)

Load evaluation–automatic scheduling

GPU    CPU

## Load evaluation–automatic scheduling

### Load evaluation

- Gradient (CPU: 3 ms; GPU: 1 ms)
- Integration (CPU: 3.5 ms; GPU: 1 ms)
- Multiple (CPU: 2 ms; GPU: 1 ms)
- Fourier transform (CPU: 10 ms; GPU: 1 ms)

### Automatic scheduling

- Gradient
- Integral
- Multiple
- Fourier transform

Scheduling

CPU    GPU

### Distribution execution

- Gradient
- Integral
- Multiple
- Fourier transform

CPU    GPU

FIG. 12

Simulation mesh          Intermediate result          Rendering mesh

$$x_j' = \sum_i^n w_i x_i \longrightarrow x_j' \qquad \sum_j^m w_j' x_j' \longrightarrow \cdots \longrightarrow x_k''$$

Update vertex
coordinates

FIG. 13

Physical simulation → Online mapping → Screen drawing

FIG. 14

(a)                                        (b)

FIG. 15

Determine, in response to a first operation of a user, a theme used by an electronic device, where the theme includes an elastic body displayed on an always on display screen — Step 1601

Obtain a simulation mesh corresponding to the elastic body — Step 1602

Map the simulation mesh to a rendering mesh based on a mapping relationship — Step 1603

Display, based on the rendering mesh, the always on display screen including the elastic body — Step 1604

FIG. 16

Electronic device 1700

Transceiver unit — 1701

Processing unit — 1702

Display unit — 1703

FIG. 17

## INTERNATIONAL SEARCH REPORT

| International application No. |
| --- |
| **PCT/CN2024/073885** |

| A. | CLASSIFICATION OF SUBJECT MATTER |
| --- | --- |

G06T 1/20(2006.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNKI, CNTXT, DWPI, ENTXT, ENTXTC: 壁纸, 弹球, 弹性体, 动态壁纸, 仿真, 仿真网格, 球, 柔体, 柔性体, 网格, 熄屏, 转场动画, 渲染, 渲染网格, dynamic wallpaper, screen off, soft body, elastic body, simulation grid, rendering

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 115344176 A (HONOR TERMINAL CO., LTD.) 15 November 2022 (2022-11-15) entire document | 1-13 |
| A | CN 114780012 A (HONOR TERMINAL CO., LTD.) 22 July 2022 (2022-07-22) entire document | 1-13 |
| A | CN 115658191 A (HUAWEI TECHNOLOGIES CO., LTD.) 31 January 2023 (2023-01-31) entire document | 1-13 |
| A | CN 111343329 A (BEIJING XIAOMI MOBILE SOFTWARE CO., LTD.) 26 June 2020 (2020-06-26) entire document | 1-13 |
| A | US 2023231944 A1 (ASUSTEK COMPUTER INC.) 20 July 2023 (2023-07-20) entire document | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 February 2024** | **22 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/073885**

| Patent document cited in search report | | | Publication date (day/month/year) | Patent family member(s) | | | Publication date (day/month/year) |
|---|---|---|---|---|---|---|---|
| CN | 115344176 | A | 15 November 2022 | WO | 2022237317 | A1 | 17 November 2022 |
| | | | | EP | 4116811 | A1 | 11 January 2023 |
| | | | | EP | 4116811 | A4 | 27 September 2023 |
| | | | | HK | 40080327 | A0 | 05 May 2023 |
| CN | 114780012 | A | 22 July 2022 | CN | 114780012 | B | 20 June 2023 |
| CN | 115658191 | A | 31 January 2023 | CN | 116627560 | A | 22 August 2023 |
| | | | | WO | 2023280021 | A1 | 12 January 2023 |
| CN | 111343329 | A | 26 June 2020 | EP | 3913457 | A1 | 24 November 2021 |
| | | | | US | 2021365276 | A1 | 25 November 2021 |
| | | | | US | 11449187 | B2 | 20 September 2022 |
| | | | | CN | 111343329 | B | 08 September 2020 |
| | | | | EP | 3913457 | A4 | 24 November 2021 |
| US | 2023231944 | A1 | 20 July 2023 | TW | 202331467 | A | 01 August 2023 |
| | | | | TW | I799090 | B | 11 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310974211